# EUROPÄISCHE PATENTSCHRIFT

(11) **EP 4 238 169 B1**
(45) Veröffentlichungstag und Bekanntmachung des Hinweises auf die Patenterteilung: **06.08.2025**
(21) Anmeldenummer: 21794376.0
(22) Anmeldetag: 18.10.2021
(51) Int. Cl.: H01M 50/242, H01M 50/227, H01M 50/249

(54) **BATTERIESCHALE, TRAKTIONSBATTERIE, KRAFTFAHRZEUG, WERKZEUG ZUM HERSTELLEN EINER BATTERIESCHALE UND VERFAHREN ZUM HERSTELLEN EINER BATTERIESCHALE**
BATTERY SHELL, TRACTION BATTERY, MOTOR VEHICLE, TOOL FOR PRODUCING A BATTERY SHELL AND METHOD FOR PRODUCING A BATTERY SHELL
COQUE DE BATTERIE, BATTERIE DE TRACTION, VÉHICULE À MOTEUR, OUTIL DE PRODUCTION D'UNE COQUE DE BATTERIE ET PROCÉDÉ DE PRODUCTION D'UNE COQUE DE BATTERIE

(30) Priorität: 29.10.2020 DE 102020128527
(43) Veröffentlichungstag der Anmeldung: 06.09.2023
(73) Patentinhaber: Kautex Textron GmbH & Co. KG, 53229 Bonn (DE)
(72) Erfinder: WOLF, Hartmut, 53639 Königswinter (DE); ENKIRCH, Georg, 56414 Salz (DE); ZHAO, Weiwei, 53229 Bonn (DE); WITSCHEL, Bernhard, 01277 Dresden (DE); MERTEL, Achim, 01099 Dresden (DE); MÜNTER, Sebastian, 01097 Dresden (DE)
(74) Vertreter: Richly & Ritschel Patentanwälte PartG mbB
(86) Internationale Anmeldenummer: PCT/EP2021/078825
(87) Internationale Veröffentlichungsnummer: WO 2022/089980

(56) Entgegenhaltungen:
- EP-B1- 3 267 507
- WO-A1-2020/060341
- WO-A1-2020/224954
- WO-A1-2021/122537
- DE-A1- 102012 213 308
- DE-A1- 102016 214 974
- US-A1- 2018 337 377
- US-A1- 2018 337 378
- US-A1- 2022 212 530

## Beschreibung

Diese Patentanmeldung beansprucht die Priorität der deutschen Patentanmeldung 10 2020 128 527.2, auf deren Offenlegungsinhalt hiermit ausdrücklich Bezug genommen wird.

Die Erfindung betrifft eine Batterieschale, eine Traktionsbatterie, ein Kraftfahrzeug, ein Werkzeug zum Herstellen einer Batterieschale und ein Verfahren zum Herstellen einer Batterieschale.

Eine Batterie, insbesondere eine Traktionsbatterie für die Energiespeicherung in einem Kraftfahrzeug, besteht aus einer Vielzahl von Bauteilen. Einem Batteriegehäuse aufweisend zumindest eine Batterieschale kommt dabei unter anderem die Aufgabe zu, Batteriemodule und weitere benötigte Komponenten zu befestigen und zu schützen.

Bei flachen Batteriegehäusen, insbesondere Batteriegehäusen für den Einsatz in Elektrofahrzeugen, ergibt sich für das Batteriegehäuse die Anforderung, die hohe Masse der Batteriemodule bei vergleichsweise hohen Beschleunigungswerten sicher und robust zu lagern, weshalb heutige Batteriegehäuse eine vergleichsweise hohe Masse aufweisen.

Weiterhin stellt sich die Anforderung an eine Batterie eines Elektrofahrzeuges, dass die Batteriemodule vor Beschädigungen bei etwaigen Unfällen geschützt werden sollen.

Batterieschalen aus Kunststoff sind im Stand der Technik in unterschiedlichen Ausführungen bekannt.

Der Erfindung liegt die Aufgabe zugrunde, dem Stand der Technik eine Verbesserung oder eine Alternative zur Verfügung zu stellen.

Nach einem ersten Aspekt der Erfindung löst die Aufgabe eine Batterieschale, insbesondere für eine Batterieschale einer Traktionsbatterie, wobei die Batterieschale aus Kunststoff ausgeformt ist, wobei die Batterieschale einen Boden und Seitenwände aufweist, wobei die Batterieschale eine Innenseite und eine Außenseite aufweist, wobei die Batterieschale in einer Querrichtung eine maximale Quererstreckung und in einer Höhenrichtung eine maximale Höhenerstreckung aufweist, wobei die Batterieschale ein inneres Versteifungsmittel, insbesondere ein sich in der Querrichtung oder einer Längsrichtung der Batterieschale erstreckendes inneres Versteifungsmittel, insbesondere ein sich in der Querrichtung der Batterieschale und der Längsrichtung der Batterieschale erstreckendes inneres Versteifungsmittel, und/oder ein äußeres Versteifungsmittel, insbesondere zumindest ein sich in der Längsrichtung der Batterieschale erstreckendes äußeres Versteifungsmittel, aufweist und wobei das innere Versteifungsmittel und/oder das äußere Versteifungsmittel ein Fasermaterial aufweist.

Begrifflich sei hierzu Folgendes erläutert:
Zunächst sei ausdrücklich darauf hingewiesen, dass im Rahmen der hier vorliegenden Patentanmeldung unbestimmte Artikel und Zahlenangaben wie "ein", "zwei" usw. im Regelfall als "mindestens"-Angaben zu verstehen sein sollen, also als "mindestens ein...", "mindestens zwei ..." usw., sofern sich nicht aus dem jeweiligen Kontext ausdrücklich ergibt oder es für den Fachmann offensichtlich oder technisch zwingend ist, dass dort nur "genau ein ...", "genau zwei ..." usw. gemeint sein können.

Im Rahmen der hier vorliegenden Patentanmeldung sei der Ausdruck "insbesondere" immer so zu verstehen, dass mit diesem Ausdruck ein optionales, bevorzugtes Merkmal eingeleitet wird. Der Ausdruck ist nicht als "und zwar" und nicht als "nämlich" zu verstehen.

Unter einer "Traktionsbatterie" wird ein Energiespeicher verstanden, insbesondere ein Energiespeicher für elektrischen Strom. Vorzugsweise ist eine Traktionsbatterie zum Einbau in sowie zum Antrieb von Elektroautos geeignet. Vorzugsweise ist eine Traktionsbatterie zur Nutzung in einem batterieelektrischen Kraftfahrzeug und/oder einem Kraftfahrzeug mit batterieelektrischem Antrieb und Verbrennungsmotor geeignet.

Unter einem "Kunststoff" wird ein Werkstoff verstanden, der hauptsächlich aus Makromolekülen besteht.

Vorzugsweise ist ein Kunststoff ein thermoplastischer Kunststoff, wobei sich ein thermoplastischer Kunststoff in einem stoffabhängigen Temperaturbereich verformen lässt, wobei dieser Prozess reversibel ist und durch Abkühlung und Wiedererwärmung bis in den schmelzflüssigen Zustand beliebig oft wiederholt werden kann.

Unter einer "Batterieschale" wird ein Gehäusebestandteil einer Batterie, insbesondere einer Traktionsbatterie, verstanden.

Insbesondere ist eine Batterieschale zur Aufnahme von Komponenten einer Batterie eingerichtet und weist dementsprechend einen Aufnahmeraum zur Aufnahme von Komponenten auf, sodass diese durch die Batterieschale vor äußeren Einflüssen geschützt und/oder zumindest mittelbar in der Batterieschale befestigt werden können.

Vorzugsweise wird unter einer Batterieschale eine Batterieunterschale oder eine Batterieoberschale verstanden, wobei Batterieunterschale und Batterieoberschale vorzugsweise gemeinsam die wesentlichen Komponenten des Gehäuses einer Traktionsbatterie ergeben.

Insbesondere weist eine Batterieschale einen "Boden" und im vorzugsweisen Fall einer Traktionsbatterie mit einem im Wesentlichen rechteckigen Grundriss zumindest vier "Seitenwände" auf.

Boden und Seitenwände der Batterieschale formen das Aufnahmevolumen einer Batterieschale aus, wobei das Aufnahmevolumen der Batterieschale die "Innenseite" der Batterieschale beschreibt.

Ausgehend von dem Aufnahmevolumen der Batterieschale befindet sich die "Außenseite" der Batterieschale auf der von dem Aufnahmevolumen abgewendeten Seite des Bodens sowie der Seitenwände.

Unter einem "inneren Versteifungsmittel" wird eine geometrische Ausgestaltung der Batterieschale auf der Innenseite der Batterieschale verstanden, welche dazu eingerichtet ist, die Batterieschale zu versteifen.

Vorzugsweise handelt es sich bei einem inneren Versteifungsmittel um einen Spant. Unter einem Spant wird eine im Innenraum der Batterieschale aufgewiesene Geometrie verstanden, die zur Versteifung der Batterieschale eingerichtet ist.

Vorzugsweise ist ein Spant ein Längsspant, wobei ein Längsspant sich in Längsrichtung der Batterieschale erstreckt und dazu eingerichtet ist zumindest ein Flächenträgheitsmoment, besonders bevorzugt zwei Flächenträgheitsmomente, eines normal zur Längsrichtung verlaufenden Querschnitts der Batterieschale zu erhöhen, sodass die Batterieschale versteift wird.

Eine Batterieschale kann eine quadratische Grundfläche aufweisen. In diesem Fall sei bei einer "Längsrichtung" der Batterieschale an eine Richtung entlang einer Seitenwand der Batterieschale gedacht, vorzugsweise an eine Fahrtrichtung eines designierten Kraftfahrzeugs.

Sofern die Batterieschale eine rechteckige oder anderweitig von einer quadratischen Grundfläche abweichende Grundfläche aufweist, so wird unter der Längsrichtung die Erstreckungsrichtung der zumindest einen Seitenwand der Batterieschale verstanden, die die längste Erstreckung aufweist.

Insbesondere ist die Längserstreckungsrichtung parallel zu dem Boden der Batterieschale.

Unter einer "Höhenrichtung" wird diejenige Richtung verstanden, welche in Richtung der Normale der von der Querrichtung und der Längsrichtung aufgespannten Ebene verläuft.

Vorzugsweise ist ein Spant ein Querspant, wobei ein Querspant sich in Querrichtung der Batterieschale erstreckt und dazu eingerichtet ist zumindest ein Flächenträgheitsmoment, besonders bevorzugt zwei Flächenträgheitsmomente, eines normal zur Querrichtung verlaufenden Querschnitts der Batterieschale zu erhöhen, sodass die Batterieschale versteift wird.

Vorzugsweise ist ein Spant so angeordnet, dass er als räumliche Trennung zwischen zwei designiert benachbarten Batteriezellen und/oder Batteriemodulen eingerichtet ist. Besonders bevorzugt kann ein Batteriemodul an einem inneren Versteifungsmittel befestigt werden, Weiterhin bevorzugt wird ein Batteriemodul von einem inneren Versteifungsmittel getragen.

Vorzugsweise weist ein inneres Versteifungsmittel eine zumindest bereichsweise stoffliche Veränderung gegenüber der Batterieschale auf.

Vorzugsweise weist eine Schicht eines inneren Versteifungsmittels, eine stoffliche Veränderung gegenüber dem Material der Batterieschale auf, erfindungsgemäß in Form von in die Schicht eingebrachtem Fasermaterial, welches dazu vorzugsweise dazu eingerichtet ist, die Steifigkeit der Decklage in einer Erstreckungsrichtung der Decklage zu erhöhen.

Eine Batterieschale kann eine quadratische Grundfläche aufweisen. In diesem Fall sei bei einer "Querrichtung" der Batterieschale an eine Richtung entlang einer Seitenwand der Batterieschale gedacht.

Sofern die Batterieschale eine rechteckige oder anderweitig von einer quadratischen Grundfläche abweichende Grundfläche aufweist, so wird unter der Querrichtung die Erstreckungsrichtung querab der zumindest einen Seitenwand der Batterieschale verstanden, die die längste Erstreckung aufweist.

Insbesondere ist die Quererstreckungsrichtung parallel zu dem Boden der Batterieschale.

Vorzugsweise weist ein inneres Versteifungsmittel zumindest einen Längsspant und zumindest einen Querspant auf. Vorzugsweise sind der zumindest eine Längsspant und der zumindest eine Querspant miteinander verbunden.

Unter einem "äußeren Versteifungsmittel" wird eine geometrische Ausgestaltung der Batterieschale auf der Außenseite der Batterieschale und/oder eine stoffliche Veränderung der Batterieschale verstanden, welche dazu eingerichtet ist, die Batterieschale zu versteifen.

Vorzugsweise ist ein äußeres Versteifungsmittel dazu eingerichtet, den Boden der Batterieschale und/oder zumindest eine Seitenwand der Batterieschale zu versteifen.

Vorzugsweise sei bei einem äußeren Versteifungsmittel an eine Profilierung zumindest einer Seitenwand der Batterieschale gedacht, wobei die Profilierung der zumindest einen profilierten Seitenwand der Batterieschale zumindest ein Flächenträgheitsmoment der zumindest einen profilierten Seitenwand der Batterieschale, besonders bevorzugt zwei Flächenträgheitsmomente der zumindest einen profilierten Seitenwand der Batterieschale, gegenüber einer Seitenwand einer Batterieschale ohne Profilierung und mit vergleichbarer Wandstärke sowie vergleichbarer stofflicher Zusammensetzung erhöht.

Bei einer Profilierung sei vorzugsweise an ein I-Profil, ein U-Profil, ein T-Profil, ein Z-Profil, ein L-Profil, ein aus den vorherig genannten Profilen kumulativ zusammengesetztes Profil oder eine abweichende Profilierung gedacht.

Ausdrücklich sei darauf hingewiesen, dass unter einer Profilierung jede geometrische Änderung gegenüber einer ebenen Erstreckung zumindest einer Seitenwand und/oder des Bodens der Batterieschale verstanden werden kann.

Vorzugsweise sei bei einem äußeren Versteifungsmittel an eine stoffliche Veränderung zumindest einer Seitenwand der Batterieschale gedacht, wobei die stoffliche Veränderung der zumindest einen stofflich veränderten Seitenwand der Batterieschale zumindest eine Biegesteifigkeit bezogen aus eine erste Achse und/oder eine Torsionssteifigkeit der zumindest einen stofflich veränderten Seitenwand der Batterieschale, besonders bevorzugt eine erste Biegesteifigkeiten bezogen auf eine erste Achse und eine zweite Biegesteifigkeit bezogen auf eine zweite Achse der zumindest einen stofflich veränderten Seitenwand der Batterieschale, gegenüber einer Seitenwand einer Batterieschale ohne stoffliche Veränderung und mit vergleichbarer Wandstärke sowie vergleichbarer Profilierung erhöht.

Bei einer stofflichen Veränderung zur Modifizierung eines äußeren Versteifungsmittels sei erfindungsgemäß an einen Zusatz von Fasermaterial in zumindest einer Wand und/oder dem Boden der Batterieschale gedacht, wobei das Fasermaterial derart angeordnet ist, dass es zumindest eine Biegesteifigkeit um eine erste Achse und/oder eine Torsionssteifigkeit, bevorzugt eine erste Biegesteifigkeiten bezogen auf eine erste Achse und eine zweite Biegesteifigkeit bezogen auf eine zweite Achse, der zumindest einen Seitenwand und/oder des Bodens der Batterieschale erhöhen kann.

Es sei ausdrücklich darauf hingewiesen, dass sich der hier vorgestellte Aspekt eines äußeren Versteifungsmittels nicht auf eine Versteifung einer Seitenwand der Batterieschale beschränkt ist, sondern auch zwei oder mehr Seitenwände der Batterieschale, vorzugsweise alle Seitenwände der Batterieschale, eine äußere Versteifung aufweisen können.

Ausdrücklich sei darauf hingewiesen, dass eine Seitenwand ein Bestandteil eines äußeren Versteifungsmittels darstellen kann. Unter einer "Quererstreckung" wird die Erstreckung der Batterieschale im Bereich des Bodens in Querrichtung verstanden.

Unter einer "Höhenerstreckung" wird die Erstreckung der Batterieschale in Höhenrichtung verstanden.

Hier wird eine Batterieschale aus Kunststoff, insbesondere einem thermoplastischen Kunststoff vorgeschlagen, welche zur Versteifung ein inneres Versteifungsmittel und/oder ein äußeres Versteifungsmittel aufweist.

Vorteilhaft kann durch das hier vorgeschlagene innere Versteifungsmittel und/oder äußere Versteifungsmittel erreicht werden, dass die Batterieschale und die designierte Traktionsbatterie aufweisend die Batterieschale vor einem Seitenaufprall mittels dem äußeren Versteifungsmittel geschützt werden können.

Weiterhin vorteilhaft kann durch das innere Versteifungsmittel und/oder das äußere Versteifungselement die Steifigkeit der Batterieschale erhöht werden und/oder bei gleicher Belastbarkeit der Batterieschale die Masse einer Batterieschale reduziert und Material eingespart werden.

Erfindungsgemäß ist die Batterieschale monolithisch ausgeformt.

Begrifflich sei hierzu Folgendes erläutert:
Unter einer "monolithisch" ausgeformten Batterieschale wird eine Batterieschale verstanden, welche in einem einzigen Bauteil zusammenhängend und fugenlos hergestellt ist.

Mit anderen Worten ist eine monolithisch ausgeformte Batterieschale nicht aus mehreren Einzelteilen zusammengesetzt und auch nicht aus einer Mehrzahl von Einzelteilen etwa mittels eines Schweißverfahrens stoffschlüssig gefügt. Vielmehr ist eine monolithisch ausgeformte Batterieschale fugenlos.

Vorzugsweise wird unter einer monolithisch ausgeformten Batterieschale eine werkzeugfallende Batterieschale verstanden.

Unter einer werkzeugfallenden Batterieschale wird eine Batterieschale verstanden, die in einem Schritt mithilfe eines Werkzeugs hergestellt wird.

Vorteilhaft kann hierdurch erreicht werden, dass die Batterieschale mitsamt dem inneren Versteifungsmittel und/oder äußeren Versteifungsmittel in einem Fertigungsschritt kostengünstig hergestellt werden kann, wobei der Übergang von einem Versteifungsmittel in eine Seitenwand und/oder den Boden der Batterieschale kein zusätzliches Versagensrisiko durch eine Schweißnaht oder eine abweichende Verbindung aufweist.

So kann auch vorteilhaft eine inhärente Dichtigkeit einer Batterieschale erreicht werden.

Gemäß einer zweckmäßigen Ausführungsform ist die Batterieschale mit einem Spritzgießverfahren oder einem Pressverfahren hergestellt.

Begrifflich sei hierzu Folgendes erläutert:
Unter einem "Spritzgießverfahren" wird ein Urformverfahren verstanden, wobei der zu verarbeitende Werkstoff, insbesondere Kunststoff, mittels einer Spritzgießmaschine verflüssigt und in eine Form, dem Spritzgießwerkzeug, unter Druck eingespritzt wird. In dem Spritzgusswerkzeug geht der Werkstoff durch Abkühlung und/oder eine Vernetzungsreaktion wieder in den festen Zustand über und kann nach dem Öffnen des Spritzgießwerkzeugs als Bauteil entnommen werden.

Unter einem "Pressverfahren" wird ein Urformverfahren verstanden, bei welchem die Formmasse in einem ersten Schritt in die Kavität eines zugehörigen Presswerkzeugs eingebracht wird, wobei das Presswerkzeug in einem zweiten Schritt geschlossen wird, insbesondere unter Einsatz eines Druckkolbens. Durch das Schließen des Presswerkzeugs erlangt die Formmasse die von dem Presswerkzeug vorgegebene Form. Vorzugsweise wird das Presswerkzeug temperiert.

Bei einer "Formmasse" sei insbesondere an einen thermoplastischen oder einen duroplastischen Werkstoff gedacht, welcher gegebenenfalls mit einem Fasermaterial, insbesondere Glasfaser, Kohlenstofffaser, Aramidfaser oder dergleichen, versetzt ist.

Insbesondere kann unter einem Pressverfahren auch ein Direkt-Compoundier-Verfahren (D-LFT) verstanden werden, bei dem ein Fasermaterial in einen Extruder eingezogen wird, dort mit dem bereits aufgeschmolzenen Matrixpolymer, insbesondere einem Thermoplast oder einem Duroplast, imprägniert sowie in einen Spritzkolben überführt wird und anschließend als Formmasse in das Presswerkzeug eingebracht wird.

Vorzugsweise weist die Formmasse Fasern bis zu einer Länge von 5 mm auf.

Vorzugsweise weist die Formmasse Fasern mit einer Länge zwischen 0,5 mm und 20 mm auf, bevorzugt Fasern mit einer Länge zwischen 1,0 mm und 15 mm und besonders bevorzugt Fasern mit einer Länge zwischen 1,0 mm und 10 mm, insbesondere bei Verwendung eines Fließpressverfahrens zur Herstellung einer Batterieschale und/oder bei einer Batterieschale, die mittels einem Fließpressverfahren hergestellt worden ist.

Vorteilhaft kann so erreicht werden, dass ein etabliertes Herstellverfahren für die hier vorgeschlagen Batterieschale eingesetzt werden kann, wodurch Kosten eingespart und das Prozessrisiko des Herstellprozesses minimiert werden können.

Gemäß einer besonders bevorzugten Ausführungsform einer Batterieschale aufweisend zumindest ein inneres Versteifungsmittel weist das zumindest eine innere Versteifungsmittel einen Kern, insbesondere einen strukturierten Kern, insbesondere einen Kern in der Mitte von zwei den Kern begrenzenden Decklagen auf, insbesondere einen strukturierten Kern aufweisend eine Kreuzrippenstruktur.

Begrifflich sei hierzu Folgendes erläutert:
Vorzugsweise weist ein inneres Versteifungselement, vorzugsweise ein Spant, eine Sandwichbauweise auf. Unter einer "Sandwichbauweise" wird eine bereichsweise Kombination unterschiedlicher Geometrien und/oder stofflicher Beschaffenheit verstanden, sodass die verschiedenen Bereiche unterschiedliche Materialeigenschaften aufweisen.

Insbesondere wird unter einer Sandwichbauweise eine ebene Bauweise oder eine im Wesentlichen ebene Bauweise eines Versteifungsmittels verstanden, wobei die Sandwichbauweise einen Kern aufweist, der von zwei unmittelbar an den Kern angrenzenden Deckschichten gesäumt wird.

Ein "Kern" kann dadurch beschrieben werden, dass er ein im Vergleich zu den Decklagen geringeres spezifisches Gewicht aufweist. Vorzugsweise weist ein Kern eine besonders hohe Stabilität gegenüber Querkontraktion auf, insbesondere gegenüber einer Querkontraktion hervorgerufen von einer Biegung des Versteifungsmittels.

Vorzugsweise weist ein Kern eine gegenüber den Decklagen abweichende Geometrie auf, mittels welcher die spezifischen Eigenschaften des Kerns vorteilhaft erreicht werden können.

Vorzugsweise weist ein Kern eine gegenüber den Decklagen abweichende stoffliche Beschaffenheit auf, mittels welcher die spezifischen Eigenschaften des Kerns vorteilhaft erreicht werden können.

Vorzugsweise weist der Kern ein poröses Material auf.

Vorzugsweise besteht der Kern aus Holz, insbesondere aus Balsaholz.

Unter einem "strukturierten Kern" wird sowohl ein Kern mit gegenüber den Decklagen abweichender Geometrie und/oder ein Kern mit gegenüber den Decklagen abweichender stofflicher Beschaffenheit verstanden, wobei ein strukturierter Kern eine Struktur aufweist.

Unter einer "Kreuzrippenstruktur" wird eine Geometrie eines Kerns verstanden, wobei der Kern Rippen aufweist, deren jeweilige Enden vorzugsweise die Knotenpunkte der Rippenstruktur bilden.

Vorzugsweise ist eine Kreuzrippenstruktur dazu eingerichtet, die in einem Kern auftretenden Druckkräfte und/oder Schubkräfte in die begrenzenden Decklagen abzuleiten.

Vorzugsweise wird ein strukturierter Kern, insbesondere ein strukturierter Kern aufweisend eine Kreuzrippenstruktur, mit einem entsprechenden Strukturkernwerkzeug von der Innenseite der Batterieschale und/oder von der Außenseite der Batterieschale ausgeformt.

Vorzugsweise sind Rippen eben oder im Wesentlichen eben ausgeformt.

Vorzugsweise teilen einander angrenzende Rippen jeweils nur einen gemeinsamen Knotenpunkt miteinander.

Vorzugsweise weist eine Kreuzrippenstruktur ein Zickzack-Muster auf.

Vorzugsweise kreuzen sich Kreuzrippen wie die Diagonalen in einem Rechteck.

Unter einer "Decklage" wird eine Materiallage verstanden, welche einen Kern eines Versteifungsmittels in Sandwichbauweise beschränkt.

Vorzugsweise weist eine Decklage eine stoffliche Veränderung gegenüber dem Material der Batterieschale auf, vorzugsweise in Form von in die Decklage eingebrachtem Fasermaterial, welches dazu vorzugsweise dazu eingerichtet ist, die Steifigkeit der Decklage in einer Erstreckungsrichtung der Decklage zu erhöhen.

Das hier vorgeschlagene innere Versteifungsmittel in Sandwichbauweise ermöglicht vorteilhaft einen Leichtbau eines inneren Versteifungsmittels. Somit kann bei gleicher Steifigkeit Gewicht und Material gegenüber einem inneren Versteifungsmittel ohne Sandwichbauweise eingespart werden. Alternativ kann bei gleichem Gewicht die Steifigkeit des inneren Versteifungsmittels signifikant erhöht werden.

Besonders bevorzugt weist das zumindest eine innere Versteifungsmittel einer Batterieschale aufweisend zumindest ein inneres Versteifungsmittel zumindest bereichsweise eine Schicht eines Faser-Kunststoff-Verbundes auf, insbesondere eine Schicht eines Faser-Kunststoff-Verbundes in einer ersten Decklage eines inneren Versteifungsmittels und/oder eine Schicht eines Faser-Kunststoff-Verbundes in einer zweiten Decklage eines inneren Versteifungsmittels.

Begrifflich sei hierzu Folgendes erläutert:
Unter einem "Faser-Kunststoff-Verbund" wird ein kristallisierter Werkstoff bestehend aus orientierten Fasern und einer Kunststoffmatrix verstanden, wobei die Kunststoffmatrix die Fasern umgibt und wobei die Fasern durch adhäsive Wechselwirkung an die Kunststoffmatrix gebunden sind. Vorzugsweise handelt es sich bei den Fasern um Glasfasern, Kohlenstofffasern, Aramidfasern oder dergleichen.

Unter einer "Schicht" eines Faser-Kunststoff-Verbundes wird eine Schicht innerhalb der Batterieschale aus einem Faser-Kunststoff-Verbund verstanden, wobei die Schicht durch das Vorhandensein der den Faser-Kunststoff-Verbund begründenden Fasern gegenüber den nicht zu der Schicht gehörigen Bereichen der Batterieschale abgegrenzt ist. Diese außerhalb der Schicht angeordneten Bereiche sind von einer Formmasse aus Kunststoff ausgeformt.

Vorzugsweise ist die Formmasse während der Herstellung der Batterieschale auch als Kunststoffmatrix für den Faser-Kunststoff-Verbund zum Einsatz gekommen. Die Formmasse kann dabei jedoch auch selbst Fasern aufweisen, wobei sich die Fasern der Formmasse durch ihre Länge und ihre Anordnung von den Fasern in der Schicht des Faser-Kunststoff-Verbundes unterscheiden, insbesondere sind die Fasern in der Formmasse im Vergleich zu den Fasern in der Schicht des Faser-Kunststoff-Verbundes kurz und chaotisch orientiert.

Vorzugsweise kann durch die Schicht aus einem Faser-Kunststoff-Verbund die Steifigkeit des inneren Versteifungsmittels erhöht und/oder das Gewicht des inneren Versteifungsmittels bei vergleichbarer Steifigkeit reduziert werden.

Gemäß einer optionalen Ausführungsform einer Batterieschale aufweisend zumindest ein inneres Versteifungsmittel weist das zumindest eine innere Versteifungsmittel zumindest eine Querrippe auf.

Begrifflich sei hierzu Folgendes erläutert:
Unter einer "Querrippe" wird eine schlanke querab zur Haupterstreckungsrichtung des inneren Versteifungselements verlaufende rippenförmig ausgebildete Fortsetzung des inneren Versteifungsmittels verstanden, welche dazu eingerichtet ist, das innere Versteifungsmittel gegenüber dem Boden der Batterieschale abzustützen.

Konkret sei dabei auch an eine Mehrzahl von Querrippen gedacht, welche in regelmäßigen oder unregelmäßigen Abständen angeordnet sind.

Vorzugsweise sind Querrippen paarweise angeordnet, wobei weiterhin vorzugsweise je eine Querrippe auf beiden Seiten des inneren Versteifungsmittels bei gleichem Wert der Längenerstreckung des inneren Versteifungsmittels ausgebildet ist.

Vorteilhaft trägt eine Querrippe oder eine Mehrzahl von Querrippen zur Versteifung des Bodens der Batterieschale bei, insbesondere im Übergangsbereich zwischen Boden und innerem Versteifungsmittel.

Gemäß einer optionalen Ausführungsform einer Batterieschale aufweisend zumindest ein inneres Versteifungsmittel erstreckt sich das zumindest eine innere Versteifungsmittel über eine Höhe von größer gleich 30 % der maximalen Höhenerstreckung, bevorzugt von größer gleich 50 % und besonders bevorzugt von größer gleich 70 %.

Optional erstreckt sich das zumindest eine innere Versteifungsmittel über eine Höhe von größer gleich 40 % der maximalen Höhenerstreckung, bevorzugt erstreckt sich das zumindest eine innere Versteifungsmittel über eine Höhe von größer gleich 60 % der maximalen Höhenerstreckung, weiterhin bevorzugt erstreckt sich das zumindest eine innere Versteifungsmittel über eine Höhe von größer gleich 80 % der maximalen Höhenerstreckung, besonders bevorzugt erstreckt sich das zumindest eine innere Versteifungsmittel über eine Höhe von größer gleich 90 % der maximalen Höhenerstreckung.

Vorteilhaft kann so die Steifigkeit des inneren Versteifungsmittels optimal auf die Bedürfnisse der Batterieschale angepasst werden, wobei auch die Menge des eingesetzten Kunststoffs reduziert werden kann.

Ausdrücklich sei darauf hingewiesen, dass die vorstehenden Werte für die Höhe des inneren Versteifungsmittels nicht als scharfe Grenzen zu verstehen sein sollen, sondern vielmehr in ingenieurmäßigem Maßstab über- oder unterschritten werden können sollen, ohne den beschriebenen Aspekt der Erfindung zu verlassen. Mit einfachen Worten sollen die Werte einen Anhalt für die Größe des hier vorgeschlagenen Bereichs der Höhe des inneren Versteifungsmittels liefern.

Gemäß einer optionalen Ausführungsform einer Batterieschale aufweisend zumindest ein äußeres Versteifungsmittel erstreckt sich das zumindest eine äußere Versteifungsmittel über eine Höhe von größer gleich 30 % der maximalen Höhenerstreckung erstreckt, bevorzugt von größer gleich 50 % und besonders bevorzugt von größer gleich 70 %.

Optional erstreckt sich das zumindest eine äußere Versteifungsmittel über eine Höhe von größer gleich 40 % der maximalen Höhenerstreckung, bevorzugt erstreckt sich das zumindest eine äußere Versteifungsmittel über eine Höhe von größer gleich 60 % der maximalen Höhenerstreckung, weiterhin bevorzugt erstreckt sich das zumindest eine äußere Versteifungsmittel über eine Höhe von größer gleich 80 % der maximalen Höhenerstreckung, besonders bevorzugt erstreckt sich das zumindest eine äußere Versteifungsmittel über eine Höhe von größer gleich 90 % der maximalen Höhenerstreckung.

Vorteilhaft können so die Steifigkeit und der Materialbedarf des äußeren Versteifungsmittels optimal auf die Bedürfnisse der Batterieschale angepasst werden.

Ausdrücklich sei darauf hingewiesen, dass die vorstehenden Werte für die Höhe des äußeren Versteifungsmittels nicht als scharfe Grenzen zu verstehen sein sollen, sondern vielmehr in ingenieurmäßigem Maßstab über- oder unterschritten werden können sollen, ohne den beschriebenen Aspekt der Erfindung zu verlassen. Mit einfachen Worten sollen die Werte einen Anhalt für die Größe des hier vorgeschlagenen Bereichs der Höhe des äußeren Versteifungsmittels liefern.

Gemäß einer zweckmäßigen Ausführungsform einer Batterieschale aufweisend zumindest ein äußeres Versteifungsmittel erstreckt sich das zumindest eine äußere Versteifungsmittel über eine Breite von größer gleich 5 % der maximalen Quererstreckung, bevorzugt von größer gleich 10 % und besonders bevorzugt von größer gleich 15 %.

Optional erstreckt sich das zumindest eine äußere Versteifungsmittel über eine Breite von größer gleich 7,5 % der maximalen Quererstreckung, bevorzugt erstreckt sich das zumindest eine äußere Versteifungsmittel über eine Breite von größer gleich 12,5 % der maximalen Quererstreckung, weiterhin bevorzugt erstreckt sich das zumindest eine äußere Versteifungsmittel über eine Breite von größer gleich 17,5 % der maximalen Quererstreckung, besonders bevorzugt erstreckt sich das zumindest eine äußere Versteifungsmittel über eine Breite von größer gleich 20 % der maximalen Quererstreckung.

Vorteilhaft können so die Steifigkeit und der Materialbedarf des äußeren Versteifungsmittels optimal auf die Bedürfnisse der Batterieschale angepasst werden, insbesondere auf den Schutz eines Batteriemoduls vor einem Seitenaufprall.

Ausdrücklich sei darauf hingewiesen, dass die vorstehenden Werte für die Breite des äußeren Versteifungsmittels nicht als scharfe Grenzen zu verstehen sein sollen, sondern vielmehr in ingenieurmäßigem Maßstab über- oder unterschritten werden können sollen, ohne den beschriebenen Aspekt der Erfindung zu verlassen. Mit einfachen Worten sollen die Werte einen Anhalt für die Größe des hier vorgeschlagenen Bereichs der Breite des äußeren Versteifungsmittels liefern.

Eine zweckmäßige Batterieschale weist zumindest ein äußeres Versteifungsmittel aufweisend zumindest zwei Gurte auf, bevorzugt zumindest drei Gurte, wobei die zumindest zwei Gurte zumindest mittelbar durch ein Distanzelement, insbesondere einen Steg, miteinander verbunden sind.

Begrifflich sei hierzu Folgendes erläutert:
Unter einem "Gurt" wird ein Band einer sich erstreckenden Profilierungsgeometrie verstanden. Insbesondere werden unter Gurten die Bänder einer sich erstreckenden Profilierungsgeometrie verstanden, welche von einem Distanzelement, insbesondere einem durchgehenden Steg, auf Abstand gehalten werden und so dazu eingerichtet sind, zumindest ein Flächenträgheitsmoment einer sich erstreckenden Profilgeometrie zu erhöhen.

Vorzugsweise wird unter einem Gurt die Seitenwand der Batterieschale verstanden. Hier sei konkret daran gedacht, dass sich an die Seitenwand, welche einen Gurt des äußeren Versteifungselements abbildet, ein Distanzelement anschließt, welches in einen weiteren Gurt übergeht.

Besonders bevorzugt weist eine zweckmäßige Batterieschale weist zumindest ein äußeres Versteifungsmittel aufweisend zumindest einen Gurt auf.

Unter einem "Distanzelement" wird jede Geometrie verstanden, die dazu eingerichtet ist, zwei sich im Wesentlichen in einer gemeinsamen Richtung erstreckende Gurte auf Distanz zueinander zu halten. Vorzugsweise weist ein Distanzelement eine Rippenstruktur oder eine Zellstruktur auf.

Vorzugsweise wird unter einem Distanzelement ein Steg verstanden. Unter einem "Steg" wird eine ebene Verbindung zwischen zwei Gurten verstanden, vorzugsweise zwischen einem Gurt in Form einer Seitenwand der Batterieschale und einem hierzu korrespondierenden Gurt. Vorzugsweise verbindet ein Steg benachbarte Gurte derart, dass die Gurte und der Steg gemeinsam ein I-Profil oder eine U-Profil ausbilden.

Vorteilhaft kann hierdurch die Steifigkeit des zumindest einen äußeren Versteifungselements und damit der Batterieschale erhöht werden.

Besonders bevorzugt ist zwischen zwei Gurten zumindest bereichsweise ein strukturierter Kern angeordnet, insbesondere ein strukturierter Kern aufweisend eine Kreuzrippenstruktur.

Hier wird vorgeschlagen, benachbarte Gurte eines äußeren Versteifungselements zumindest bereichsweise mittels einem strukturierten Kern zu verbinden, wodurch vorteilhaft ein besonders gutes Verhältnis zwischen der Steifigkeit des äußeren Versteifungsmittels und dem Gewicht des äußeren Versteifungsmittels erreicht werden kann.

Besonders bevorzugt weist das zumindest eine äußere Versteifungsmittel zumindest bereichsweise eine Schicht eines Faser-Kunststoff-Verbundes auf, insbesondere eine Schicht eines Faser-Kunststoff-Verbundes in einem Gurt und/oder einem Steg.

Vorteilhaft kann hierdurch erreicht werden, dass das äußere Versteifungsmittel mittels der Schicht aus Faser-Kunststoff-Verbund versteift werden kann und/oder bei gleichen Dimensionierungslasten leichter ausgeführt werden kann.

Gemäß einer besonders zweckmäßigen Ausführungsform weist das äußere Versteifungsmittel ein Befestigungsmittel auf, insbesondere an einem Kreuzungspunkt von sich kreuzenden Kreuzrippen.

Begrifflich sei hierzu Folgendes erläutert:
Unter einem "Befestigungsmittel" wird jegliches Mittel verstanden, welches zur Befestigung der Batterieschale an der die Batterieschale umgebenden Struktur eines designierten Kraftfahrzeugs eingerichtet ist.

Vorzugsweise ist ein Befestigungsmittel gemeinsam mit dem strukturierten Kern eines äußeren Versteifungsmittels ausgebildet und ohne Nachbearbeitung zur Befestigung eingerichtet. Weiterhin sei daran gedacht, dass das Befestigungsmittel mit der Ausformung der Batterieschale bereits als Hohlkörper ausgebildet ist. Vorzugsweise ist der Hohlkörper zur Aufnahme einer Gewindebuchse eingerichtet.

Vorteilhaft können durch die hier vorgeschlagene Anordnung eines Befestigungsmittels etwaige Lasten direkt auf einen vergleichsweise steifen Bereich der Batterieschale übertragen werden, insbesondere einen Bereich, welcher im Falle einer stärkeren Verformung im Zusammenhang mit einer auftretenden Betriebslast vergleichsweise weit von den durch die Batterieschale zu schützenden Batteriemodulen entfernt ist, wodurch ein etwaiger Schaden von den Batteriemodulen ferngehalten oder zumindest reduziert werden kann.

Besonders bevorzugt weist das äußere Versteifungsmittel eine Dichtfläche auf.

Begrifflich sei hierzu Folgendes erläutert:
Unter einer "Dichtfläche" wird eine Fläche verstanden, die in Form einer Kontaktfläche für ein Dichtmittel ausgebildet ist.

Vorzugsweise ist eine Dichtfläche eben.

Vorzugsweise weist eine Dichtfläche eine besonders geringe niedrige Oberflächenrauigkeit auf.

Vorzugsweise ist eine Dichtfläche dazu eingerichtet, im Zusammenspiel mit einer korrespondierenden zweiten Dichtfläche eines korrespondierenden zweiten Bauteils, insbesondere eines korrespondierenden Batteriedeckels oder einer korrespondierenden zweiten Batterieschale, und einem korrespondierenden Dichtmittel angeordnet zwischen der Batterieschale und dem korrespondierenden zweiten Bauteil eine Dichtwirkung zu bewirken, insbesondere bei Vorliegen eine wirkenden Normalkraft zwischen der Batterieschale und dem korrespondierenden zweiten Bauteil.

Vorteilhaft kann durch die Dichtfläche erreicht werden, dass eine designierte Traktionsbatterie aufweisend eine Batterieschale mit einer Dichtfläche eine besonders gut und robuste Abdichtung zwischen der Batterieschale und einer zweiten Batterieschale oder einem Batteriedeckel aufweisen kann.

Gemäß einer zweckmäßigen Ausführungsform weist das äußere Versteifungsmittel einen Auflagebereich auf.

Begrifflich sei hierzu Folgendes erläutert:
Unter einem "Auflagebereich" wird ein Teil der Geometrie eines äußeren Versteifungsmittels verstanden, welches als Anlagefläche zwischen der Batterieschale und dem die Batterieschale designiert umgebenden Kraftfahrzeug eingerichtet ist.

Vorteilhaft kann durch den Auflagebereich eine Zentrierung der Batterieschale in einem designierten Kraftfahrzeug erreicht werden, wodurch die Montage und die Wartung einer designierten Traktionsbatterie vereinfacht werden können. Außerdem kann der Auflagebereich durch einen Formschluss mit dem designiert angrenzenden Bereich des Kraftfahrzeugs ebenfalls Lasten von dem Kraftfahrzeug auf die Batterieschale und von der Batterieschale auf das Kraftfahrzeug übertragen.

Besonders bevorzugt weist die zumindest eine Schicht eines Faser-Kunststoff-Verbundes im Wesentlichen unidirektional zueinander orientierte Fasern auf.

Durch die unidirektionale Anordnung der Fasern kann die Steifigkeit an der Stelle der Schicht aus Faser-Kunststoff-Verbund weiter erhöht werden, zumindest sofern die Lastrichtung einer inneren Spannung eine Komponente in Richtung der Orientierung der Fasern aufweist.

Gemäß einer besonders zweckmäßigen Ausführungsform greift das innere Versteifungsmittel in das äußere Versteifungsmittel ein.

Hier wird vorgeschlagen, dass die strukturelle Ausgestaltung eines inneren Versteifungsmittels sich zumindest bereichsweise durch das äußere Versteifungsmittel hindurch erstreckt.

Vorteilhaft kann so der Übergangsbereich zwischen einem inneren Versteifungsmittel und einem äußeren Versteifungsmittel zusätzlich versteift werden.

Gemäß einer besonders zweckmäßigen Ausführungsform greifen ein äußeres Versteifungsmittel und ein inneres Versteifungsmittel ineinander. Mit anderen Worten weist eine Batterieschale zumindest ein äußeres Versteifungsmittel und zumindest ein inneres Versteifungsmittel auf, wobei das äußere Versteifungsmittel und das innere Versteifungsmittel einen gemeinsamen Durchdringungsbereich aufweisen, sodass sich zumindest eines der Versteifungsmittel in das andere Versteifungsmittel hinein erstreckt.

Vorteilhaft kann hierdurch die Steifigkeit der Batterieschale gegenüber komplexen Lastfällen erhöht werden.

Nach einem zweiten Aspekt der Erfindung löst die Aufgabe eine Traktionsbatterie, insbesondere eine Traktionsbatterie für ein Kraftfahrzeug, aufweisend eine Batterieschale nach dem ersten Aspekt der Erfindung.

Begrifflich sei hierzu Folgendes erläutert:
Unter einem "Kraftfahrzeug" wird ein durch einen Motor angetriebenes Fahrzeug verstanden. Vorzugsweise ist ein Kraftfahrzeug nicht an eine Schiene gebunden oder zumindest nicht dauerhaft spurgebunden.

Es versteht sich, dass sich die Vorteile einer Batterieschale nach dem ersten Aspekt der Erfindung, wie vorstehend beschrieben, unmittelbar auf eine Traktionsbatterie aufweisend eine Batterieschale gemäß dem ersten Aspekt der Erfindung erstrecken.

Es sei ausdrücklich darauf hingewiesen, dass der Gegenstand des zweiten Aspekts mit dem Gegenstand des vorstehenden Aspekts der Erfindung vorteilhaft kombinierbar ist, und zwar sowohl einzeln oder in beliebiger Kombination kumulativ.

Nach einem dritten Aspekt der Erfindung löst die Aufgabe ein Kraftfahrzeug aufweisend eine Batterieschale nach dem ersten Aspekt der Erfindung und/oder eine Traktionsbatterie nach dem zweiten Aspekt der Erfindung.

Es versteht sich, dass sich die Vorteile einer Batterieschale nach dem ersten Aspekt der Erfindung, wie vorstehend beschrieben, und/oder einer Traktionsbatterie nach dem zweiten Aspekt der Erfindung unmittelbar auf ein Kraftfahrzeug aufweisend eine Batterieschale gemäß dem ersten Aspekt der Erfindung und/oder eine Traktionsbatterie nach dem zweiten Aspekt der Erfindung erstrecken.

Es sei ausdrücklich darauf hingewiesen, dass der Gegenstand des dritten Aspekts mit den Gegenständen der vorstehenden Aspekte der Erfindung vorteilhaft kombinierbar ist, und zwar sowohl einzeln oder in beliebiger Kombination kumulativ.

Nach einem vierten Aspekt der Erfindung löst die Aufgabe ein Werkzeug zum Herstellen einer Batterieschale aus Kunststoff aufweisend ein inneres Versteifungsmittel und/oder ein äußeres Versteifungsmittel, einer Batterieschale nach dem ersten Aspekt der Erfindung, wobei das Werkzeug eine Artikelkavität bildet und wobei das Werkzeug ein Mittel zum Füllen der Artikelkavität mit einer Formmasse aus Kunststoff aufweist, wobei das Werkzeug zumindest ein Mittel zum Einklemmen eines Fasermaterials, insbesondere eines schockgefrosteten Fasermaterials und/oder eines an den Randschichten geschmolzenen Fasermaterials, aufweist.

Begrifflich sei hierzu Folgendes erläutert:
Unter einem "Werkzeug" wird eine Vorrichtung zum Urformen verstanden, insbesondere zum Urformen einer Batterieschale nach dem ersten Aspekt der Erfindung aus einer schmelzflüssigen Formmasse.

Vorzugsweise wird unter einem Werkzeug ein Spritzgießwerkzeug verstanden.

Vorzugsweise wird unter einem Werkzeug ein Presswerkzeug verstanden.

Vorzugsweise wird unter einem Werkzeug ein Tauchkantenwerkzeug verstanden.

Unter einer "Artikelkavität" wird der Hohlraum verstanden, der von einem Werkzeug zum bereichsweisen Ausformen des designiert mit dem Werkzeug herzustellenden Bauteils, insbesondere einer Batterieschale, ausgeformt wird.

Unter einem "Mittel zum Füllen" wird eine dem Werkzeug mittelbar oder unmittelbar zugeordnete Vorrichtung verstanden, welche dazu eingerichtet ist, eine schmelzflüssige Formmasse in das Werkzeug einzubringen.

Vorzugsweise wird unter einem Mittel zum Füllen eine Vorrichtung verstanden, welche dazu eingerichtet ist, die Artikelkavität des Werkzeugs und/oder den Formhohlraum des Werkzeugs mit einer schmelzflüssigen Formmasse aufzufüllen, insbesondere im Zusammenhang mit einem Spritzgießwerkzeug und/oder einer Spritzgießvorrichtung.

Vorzugsweise wird unter einem Mittel zum Füllen eine Vorrichtung verstanden, mit welcher eine schmelzflüssige Formmasse in ein zuvor geöffnetes Werkzeug eingebracht werden kann, insbesondere eingelegt werden kann, insbesondere im Zusammenhang mit einem Presswerkzeug und/oder einer Pressvorrichtung.

Hier wird ein Werkzeug zur Herstellung einer Batterieschale nach dem ersten Aspekt der Erfindung vorgeschlagen.

Es versteht sich, dass sich die zuvor erläuterten Vorteile einer Batterieschale nach dem ersten Aspekt der Erfindung auf ein Werkzeug zur Herstellung einer Batterieschale nach dem ersten Aspekt der Erfindung erstrecken.

Gemäß einer besonders bevorzugten Ausführungsform weist das Werkzeug zumindest ein Strukturkernwerkzeug auf, insbesondere zumindest ein Kreuzrippenwerkzeug, welches zur Ausformung eines strukturierten Kerns eingerichtet ist, insbesondere zur Ausformung eines strukturierten Kerns aufweisend eine Kreuzrippenstruktur.

Begrifflich sei hierzu Folgendes erläutert:
Unter einem "Strukturkernwerkzeug" wird ein optionaler Bestandteil des Werkzeugs zum Ausformen einer Batterieschale verstanden, wobei das Strukturkernwerkzeug zum Ausformen eines strukturierten Kerns eines inneren Versteifungsmittels und/oder eines äußeren Versteifungsmittels eingerichtet ist.

Vorzugsweise kann ein Strukturkernwerkzeug relativ zu dem angrenzenden Bereich des Werkzeugs zum Ausformen der Batterieschale bewegt werden, insbesondere in einer translatorischen Richtung.

Unter einem "Kreuzrippenwerkzeug" wird ein Strukturkernwerkzeug verstanden, welches zum Ausformen einer Kreuzrippenstruktur im Kern eines inneren Versteifungsmittels und/oder eines äußeren Versteifungsmittels eingerichtet ist.

Hierdurch wird vorteilhaft ermöglicht, dass die Batterieschale einen Bereich mit einem strukturierten Kern aufweisen kann, insbesondere einen Kern aufweisend Kreuzrippen und/oder einen Separationsbereich.

Es versteht sich, dass sich die vorstehend erläuterten Vorteile einer Batterieschale aufweisend einen strukturierten Kern und/oder einen Separationsbereich im Bereich eines inneren Versteifungsmittels und/oder eines äußeren Versteifungsmittels unmittelbar auf ein Werkzeug zur Herstellung einer Batterieschale aufweisend einen strukturierten Kern im Bereich eines inneren Versteifungsmittels und/oder eines äußeren Versteifungsmittels erstrecken.

Erfindungsgemäß weist das Werkzeug zumindest ein Mittel zum Einklemmen eines Fasermaterials, insbesondere eines schockgefrosteten Fasermaterials und/oder eines an den Randschichten geschmolzenen Fasermaterials, auf.

Begrifflich sei hierzu Folgendes erläutert:
Unter "Einklemmen" wird ein Befestigen verstanden, insbesondere ein lösbares Befestigen eines Fasermaterials, insbesondere eines schockgefrosteten Fasermaterials und/oder eines an den Randschichten geschmolzenen Fasermaterials, in einem Werkzeug.

Insbesondere sei dabei an ein Mittel zum Einklemmen gedacht, welches das Fasermaterial solange einklemmt, wie es nicht vollständig von der Formmasse durchtränkt ist. Vorzugsweise ist das hier vorgeschlagene Mittel zum Einklemmen dazu eingerichtet, dass es von der Formmasse verdrängt wird, sobald die Formmasse das Mittel zum Einklemmen mit dem notwendigen Druck der Formmasse erreicht. Hierdurch kann vorteilhaft erreicht werden, dass das Mittel zum Einklemmen des Fasermaterials so lange wie notwendig einklemmt.

Unter anderem wird hier vorgeschlagen, dass ein Fasermaterial an den Randschichten teilweise oder vollständig aufgeschmolzen wird, während der Kern des Fasermaterials noch von einer kristallinen Matrix umgeben wird, sodass das Fasermaterial noch eine Eigensteifigkeit aufweist, während es von einem Mittel in dem Werkzeug eingeklemmt wird.

Ein lediglich in seinen Randbereichen aufgeschmolzenes Fasermaterial mit einem Kern aufweisend eine kristalline Matrix und/oder ein schockgefrostetes Fasermaterial können von einem Roboter vorteilhaft einfach gegriffen und positioniert werden.

Vorteilhaft kann so eine Batterieschale hergestellt werden, welche im Bereich eines inneren Versteifungsmittels und/oder eines äußeren Versteifungsmittels ein Fasermaterial aufweist, wodurch die Steifigkeit der Batterieschale erhöht werden kann.

Es sei ausdrücklich darauf hingewiesen, dass der Gegenstand des vierten Aspekts mit den Gegenständen der vorstehenden Aspekte der Erfindung vorteilhaft kombinierbar ist, und zwar sowohl einzeln oder in beliebiger Kombination kumulativ.

Nach einem fünften Aspekt der Erfindung löst die Aufgabe ein Verfahren zum Herstellen einer Batterieschale aus Kunststoff aufweisend ein inneres Versteifungsmittel und/oder ein äußeres Versteifungsmittel, einer Batterieschale nach dem ersten Aspekt der Erfindung, mittels einer Spritzgießvorrichtung oder einer Pressvorrichtung mit einem eine Artikelkavität bildenden Werkzeug, einem Werkzeug nach dem vierten Aspekt der Erfindung, mit Mitteln zum Füllen der Artikelkavität mit einer Formmasse aus Kunststoff, wobei das Herstellverfahren die nachfolgenden Schritte umfasst:
a) Zumindest bereichsweises Bestücken der Artikelkavität mit einem Fasermaterial, insbesondere einem schockgefrosteten Fasermaterial und/oder einem an den Randschichten geschmolzenen Fasermaterial;
b) Füllen der Artikelkavität mit einer Formmasse aus Kunststoff;
c) Entformen der Batterieschale.

Begrifflich sei hierzu Folgendes erläutert:
Unter einem "Füllen" wird gemäß einer ersten Variante verstanden, dass ein Spritzgießwerkzeug von einem Extruder mittelbar oder unmittelbar, mit einer schmelzflüssigen Formmasse aufgefüllt und ausgefüllt wird.

Unter einem "Füllen" wird gemäß einer zweiten Variante verstanden, dass ein Presswerkzeug mit einer Formmasse von einem Extruder mittelbar oder unmittelbar beladen wird und anschließend durch den Hub des Presswerkzeugs die Formmasse in der Artikelkavität verteilt wird, sodass die Artikelkavität mit der Formmasse ausgefüllt wird.

Unter "Entformen" wird das Herausnehmen der designiert hergestellten Batterieschale nach dem ersten Aspekt der Erfindung aus dem Werkzeug verstanden.

Unter "Ausformen" wird jede Umformung eines Körpers verstanden, mittels derer eine dreidimensionale Ausformung erreicht werden kann, insbesondere eine dreidimensional ausgeformte Batterieschale.

Vorzugsweise wird unter Ausformen ein Ausformen mittels einem Spritzgussverfahren verstanden.

Vorzugsweise wird unter Ausformen ein Ausformen mittels einem compression molding Verfahren oder einem Fließpressverfahren verstanden. Dabei wird eine Formmasse in eine Kavität eines Gesenks eingebracht, wobei das Gesenk aufgeheizt ist oder aufgeheizt wird und/oder gekühlt wird. Anschließend wird die Kavität unter Einsatz eines Druckkolbens geschlossen. Durch den Druck erlangt die Formmasse die von Kavität und Druckkolben vorgegebene Form.

Hier wird ein Verfahren zum Herstellen einer Batterieschale nach dem ersten Aspekt der Erfindung vorgeschlagen, wobei die Batterieschale nach dem ersten Aspekt der Erfindung mittels einer Formmasse von einem eine Artikelkavität bildenden Werkzeug ausgeformt wird. Dabei sei unter anderem an ein Spritzgussverfahren oder ein Pressverfahren gedacht, insbesondere einem Pressverfahren mittels einem Tauchkantenwerkzeug.

Es versteht sich, dass sich die Vorteile einer Batterieschale nach dem ersten Aspekt der Erfindung auf ein Verfahren zur Herstellung einer Batterieschale nach dem ersten Aspekt erstrecken.

Erfindungsgemäß wird das die Artikelkavität bildende Werkzeug vor dem Füllen der Artikelkavität mit der Formmasse aus Kunststoff zumindest bereichsweise mit einem Fasermaterial, insbesondere einem schockgefrosteten Fasermaterial, bestückt.

Hier wird nun konkret vorgeschlagen, das Fasermaterial für eine im designierten Bauteil befindliche Schicht aus einem Faser-Kunststoff-Verbund zunächst in die Form einzubringen, insbesondere in einem schockgefrorenen und damit formstabileren Zustand.

Somit kann es vorteilhaft von einem Roboter gegriffen und positioniert werden. Beim Ausformen der Batterieschale wird das zuvor eingebrachte Fasermaterial von der Formmasse umströmt und teilweise auch durchströmt, wodurch sich die Schicht aus einem Faser-Kunststoff-Verbund bildet.

Alternativ wird konkret vorgeschlagen, dass das Fasermaterial für eine im designierten Bauteil befindliche Schicht aus einem Faser-Kunststoff-Verbund zunächst zumindest teilweise oder vollständig an seiner Randschicht aufzuschmelzen, während der Kern des Fasermaterials noch eine kristalline Matrix aufweist, und es anschließend in die Form einzubringen. Durch die kristalline Matrix weist das Fasermaterial eine vorzugsweise Eigensteifigkeit auf, sodass es vorteilhaft von einem Roboter gegriffen und positioniert werden kann.

Es sei ausdrücklich darauf hingewiesen, dass der Gegenstand des fünften Aspekts mit den Gegenständen der vorstehenden Aspekte der Erfindung vorteilhaft kombinierbar ist, und zwar sowohl einzeln oder in beliebiger Kombination kumulativ.

Weitere Vorteile, Einzelheiten und Merkmale der Erfindung ergeben sich nachfolgend aus den erläuterten Ausführungsbeispielen.

Dabei zeigen im Einzelnen:
- Figur 1:: schematisch einen Ausschnitt einer Ausführungsform einer Batterieschale;
- Figur 2:: schematisch einen Ausschnitt einer weiteren Ausführungsform einer Batterieschale;
- Figur 3:: schematisch einen Ausschnitt einer weiteren Ausführungsform einer Batterieschale;
- Figur 4:: schematisch einen Ausschnitt einer weiteren Ausführungsform einer Batterieschale;
- Figur 5:: schematisch einen Ausschnitt einer weiteren Ausführungsform einer Batterieschale;
- Figur 6:: schematisch einen Ausschnitt einer weiteren Ausführungsform einer Batterieschale;
- Figur 7:: schematisch einen Ausschnitt einer weiteren Ausführungsform einer Batterieschale;
- Figur 8:: schematisch einen Ausschnitt einer weiteren Ausführungsform einer Batterieschale;
- Figur 9:: schematisch einen Ausschnitt einer weiteren Ausführungsform einer Batterieschale; und
- Figur 10:: schematisch einen Ausschnitt einer weiteren Ausführungsform einer Batterieschale.

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

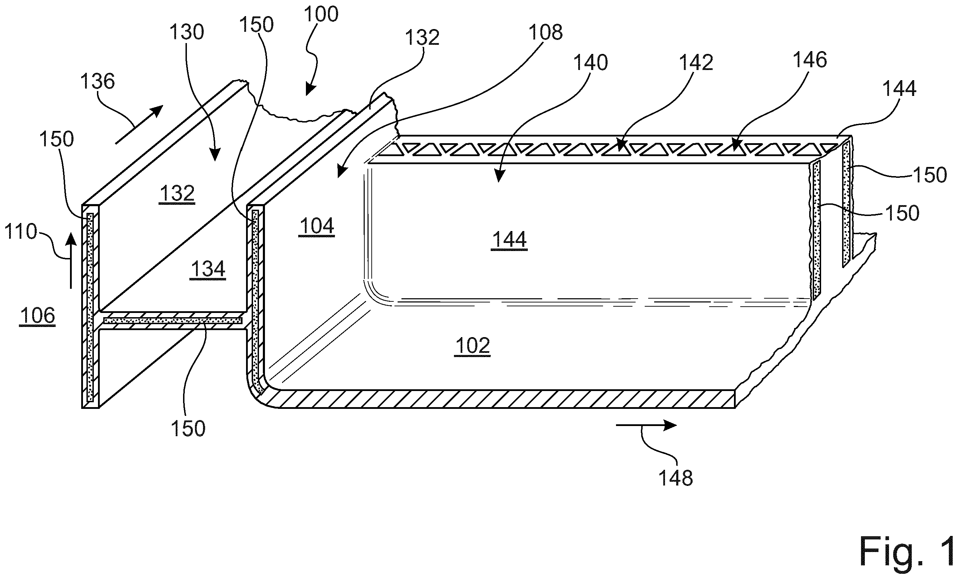

Der Ausschnitt einer Ausführungsform einer monolithisch ausgeformten Batterieschale 100 in Figur 1 weist eine Batterieschale 100 bestehend aus einem Boden 102, zumindest einer Seitenwand 104, einem äußeren Versteifungsmittel 130 und einem inneren Versteifungsmittel 140 auf, wobei die Batterieschale 100 eine Innenseite 108, eine Außenseite 106 und eine Höhenrichtung 110 aufweist.

Das äußere Versteifungsmittel 130 erstreckt sich in einer Längsrichtung 136 der Batterieschale 100 und besteht im Wesentlichen aus zwei Gurten 132, wobei einer der Gurte 132 mit der Seitenwand 104 der Batterieschale 100 zusammenfällt, einem Distanzelement 134, welches die Gurte 132 auch unter Belastung und damit einhergehender Verformung auf Distanz zueinander hält, sodass diese einen signifikanten Beitrag zu mindestens einem Flächenträgheitsmoment der Batterieschale 100 bereitstellen.

Das innere Versteifungselement 140 erstreckt sich in einer Querrichtung 148 der Batterieschale 100 und besteht im Wesentlichen aus zwei Decklagen 144, welche um einen Kern 142, insbesondere einen strukturierten Kern 142, aufweisend eine Kreuzrippenstruktur 146 angeordnet sind.

Das innere Versteifungsmittel 140 und das äußere Versteifungsmittel 130 weisen an unterschiedlichen Stellen jeweils eine Schicht 150 aus Faser-Kunststoff-Verbund auf, wodurch die Batterieschale 100 steifer und/oder leichter ausgeführt werden kann.

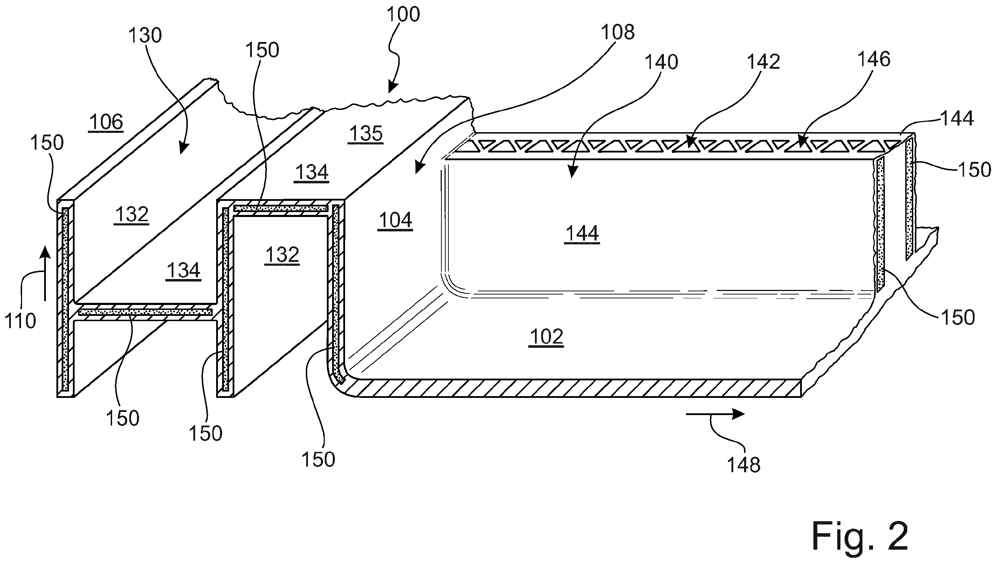

Die Ausführungsform einer Batterieschale 100 in Figur 2 weist eine abweichende Ausführungsform eines äußeren Versteifungsmittels 130 auf.

So weist das äußere Versteifungsmittel 130 insgesamt drei Gurte 132 auf, von denen einer mit der Seitenwand 104 der Batterieschale 100 zusammenfällt.

Die äußeren Gurte 132 sind mittels einem Distanzelement 134 verbunden, welches in Höhenrichtung 110 der Batterieschale 100 betrachtet auf halber Höhe angeordnet ist.

Die beiden inneren Gurte 134 sind ebenfalls mit einem Distanzelement 134 verbunden, wobei dieses Distanzelement 134 an der Stelle mit der größten Höhenausprägung (nicht bezeichnet) des äußeren Versteifungsmittels 130 angeordnet ist und wobei dieses innere Distanzelement 134 an seiner Oberseite eine Dichtfläche 135 aufweist, welche zum Abdichten mit einer korrespondierenden Batterieschale (nicht abgebildet) eingerichtet ist.

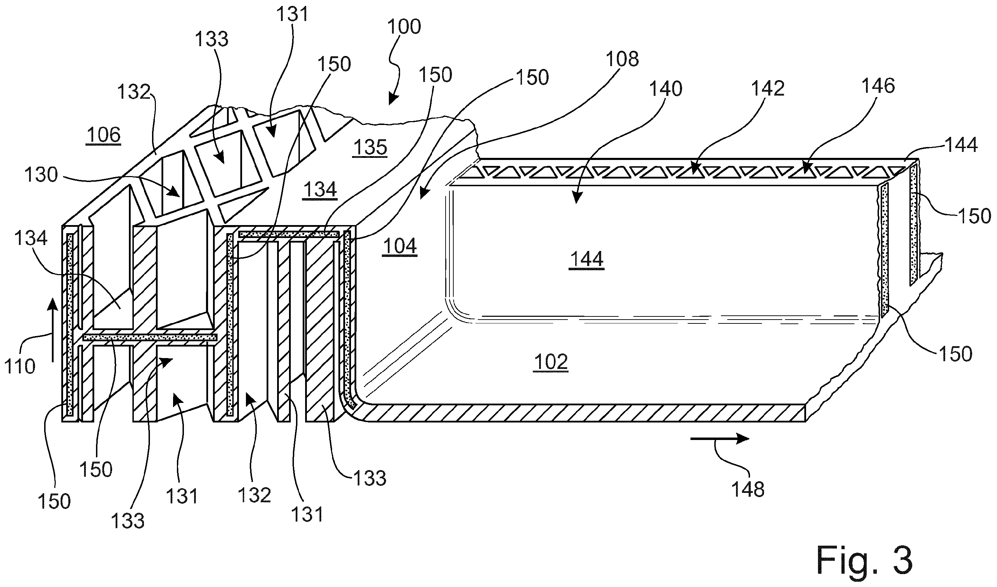

Eine weitere Ausführungsform einer Batterieschale 100 in Figur 3 weist zwischen den Gurten 132 des äußeren Versteifungsmittels 130 unterschiedliche Bereiche von strukturierten Kernen 131 auf, insbesondere von strukturierten Kernen 131 aufweisend eine Kreuzrippenstruktur 133, welche die Gurte 132 neben den Distanzelementen 134 verbinden und dem äußeren Versteifungsmittel 130 eine zusätzliche Steifigkeit oder ein reduziertes Gewicht ermöglichen.

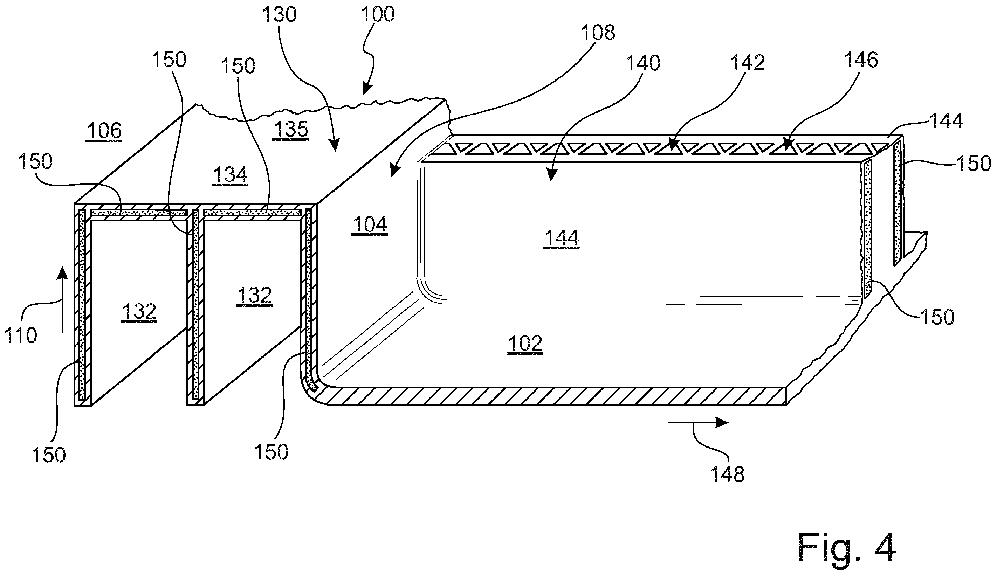

Eine weitere Ausführungsform einer Batterieschale 100 in Figur 4 weist zwischen den Gurten 132 des äußeren Versteifungsmittels 130 zwei Distanzelemente 134 auf, wobei die Distanzelemente 134 an der Stelle mit der größten Höhenausprägung (nicht bezeichnet) des äußeren Versteifungsmittels 130 angeordnet sind. Sie weisen auf ihrer oberen Oberseite eine Dichtfläche 135 auf.

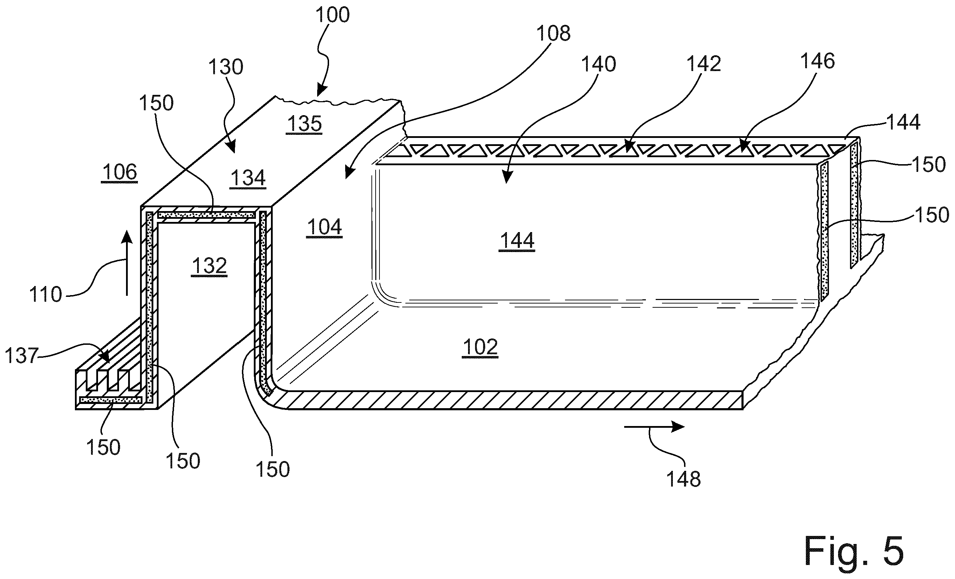

Die Ausführungsform einer Batterieschale 100 in Figur 5 weist einen Auflagebereich 137 auf, welcher zum Kontaktieren und/oder Zentrieren der Batterieschale 100 eingerichtet ist. Vorzugsweise ist der Auflagebereich 137 nahtlos umlaufend um die Batterieschale 100 angeordnet.

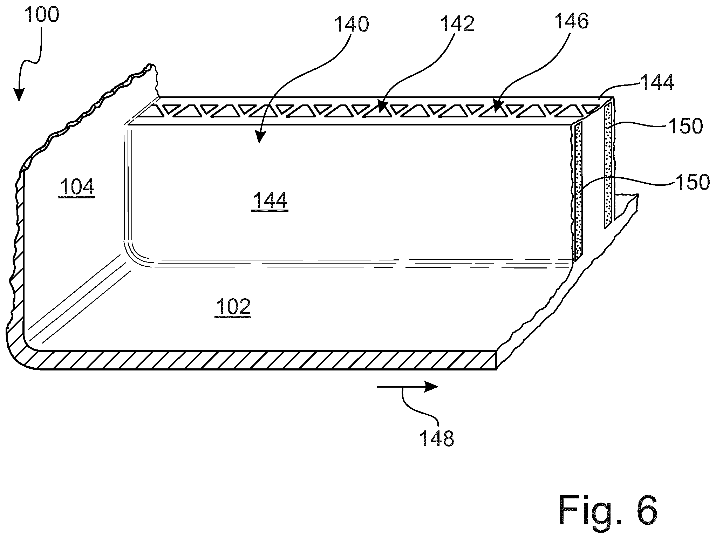

Bei der Ausführungsform einer Batterieschale 100 in Figur 6 wurde bei der Auswahl des Ausschnitts das äußere Versteifungsmittel (nicht dargestellt) weggeschnitten.

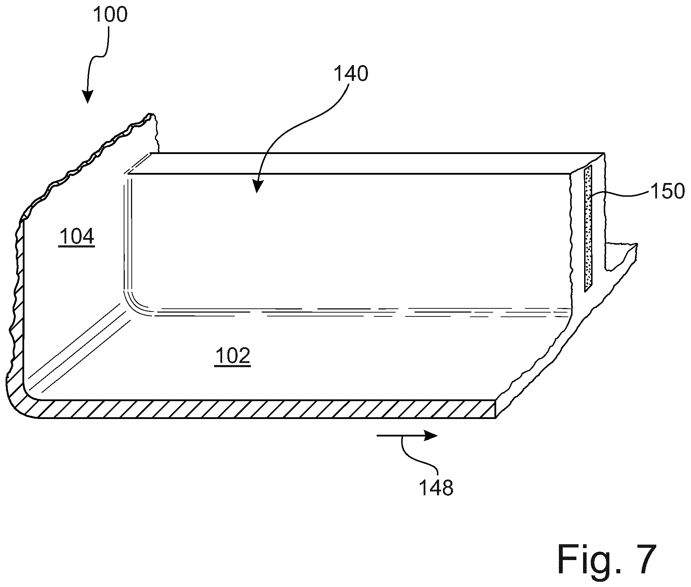

Eine weitere Ausführungsform einer Batterieschale 100 in Figur 7 weist ein anders gestaltetes inneres Versteifungsmittel 140 auf. Das innere Versteifungsmittel 140 verfügt nicht über einen zentralen strukturierten Kern, dafür aber ebenfalls über eine Schicht 150 eines Faser-Kunststoff-Verbundes, welche sich vorzugsweise über die Höhe des inneren Versteifungselements 140 erstreckt.

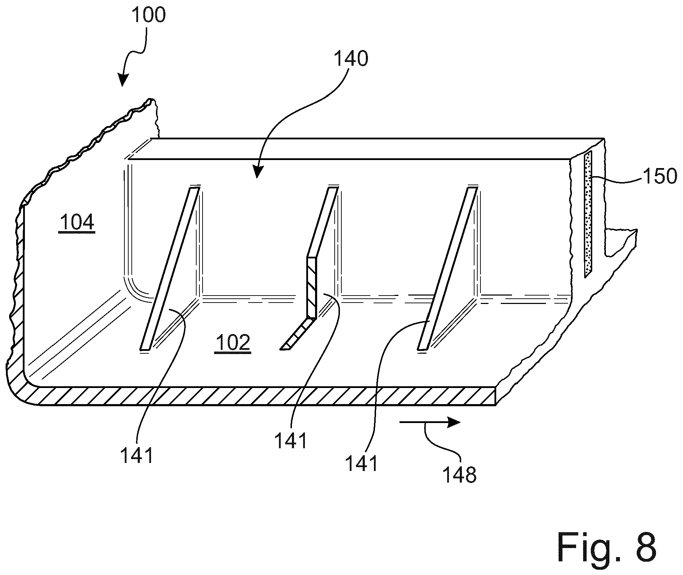

Eine weitere Ausführungsform einer Batterieschale 100 in Figur 8 weist eine Mehrzahl von Querrippen 141 zur weiteren Versteifung des inneren Versteifungsmittels 140 auf.

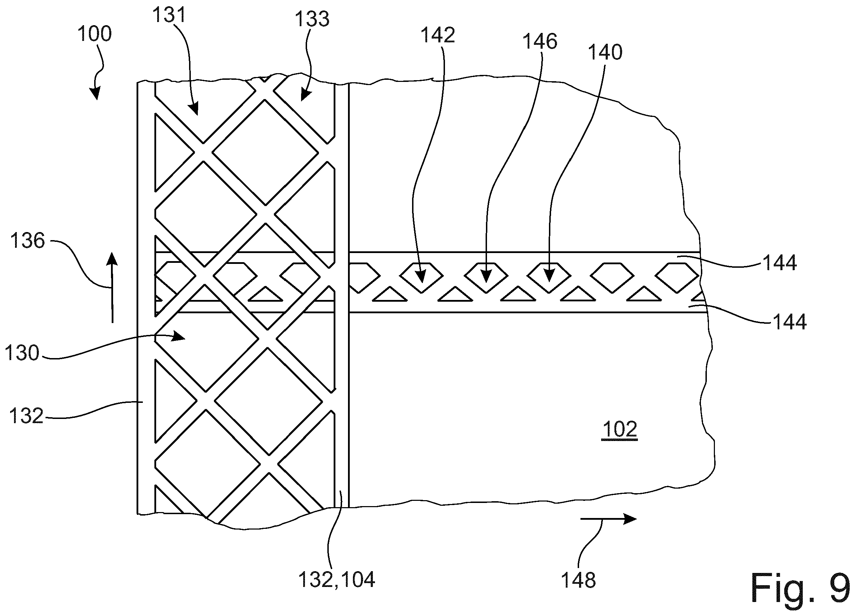

Bei einer weiteren Ausführungsform einer Batterieschale 100 in Figur 9 greifen ein äußeres Versteifungsmittel 130 und ein inneres Versteifungsmittel 140 ineinander, wobei die Formen der strukturierten Kerne 131, 142 aneinander angepasst sind, sodass eine größtmögliche zusätzliche Versteifung der Batterieschale 100 erreicht werden kann.

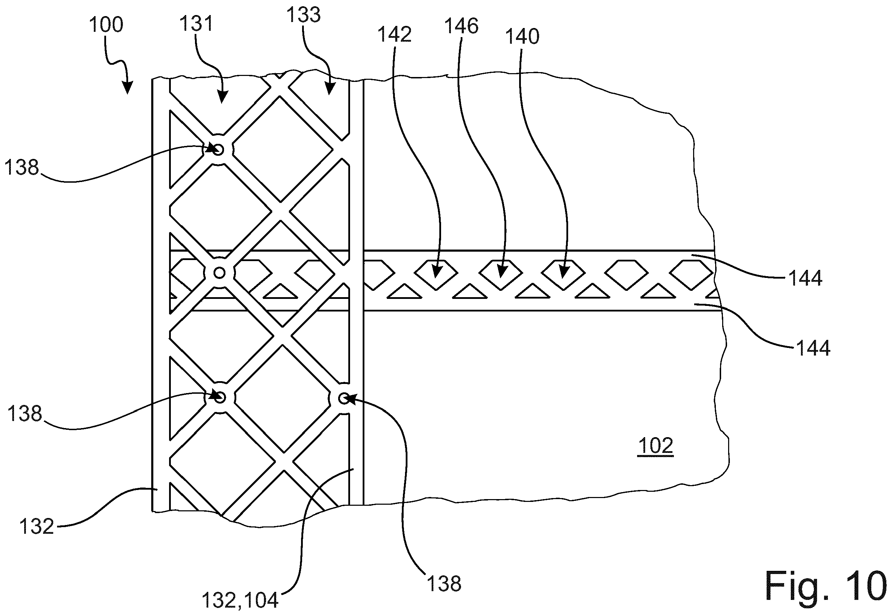

Eine Ausführungsform einer Batterieschale 100 in Figur 10 weist eine Mehrzahl von Befestigungsmitteln 138 auf, mittels derer die Batterieschale 100 mit dem Kraftfahrzeug verbunden werden kann.

### Bezugszeichenliste

- 100: Batterieschale
- 102: Boden
- 104: Seitenwand
- 106: Außenseite
- 108: Innenseite
- 110: Höhenrichtung
- 130: äußeres Versteifungsmittel
- 131: Kern, strukturierter Kern
- 132: Gurt
- 133: Kreuzrippenstruktur
- 134: Distanzelement, Steg
- 135: Dichtfläche
- 136: Längsrichtung
- 137: Auflagebereich
- 138: Befestigungsmittel
- 140: inneres Versteifungsmittel, Spant
- 141: Querrippe
- 142: Kern, strukturierter Kern
- 144: Decklagen
- 146: Kreuzrippenstruktur
- 148: Querrichtung
- 150: Schicht eines Faser-Kunststoff-Verbundes

## Patentansprüche

1. Batterieschale (100), insbesondere eine Batterieschale (100) für eine Traktionsbatterie, wobei die Batterieschale (100) aus Kunststoff ausgeformt ist, wobei die Batterieschale (100) einen Boden (102) und Seitenwände (104) aufweist, wobei die Batterieschale (100) eine Innenseite (108) und eine Außenseite (106) aufweist, wobei die Batterieschale (100) in einer Querrichtung (148) eine maximale Quererstreckung und in einer Höhenrichtung (110) eine maximale Höhenerstreckung aufweist, wobei die Batterieschale (100) monolithisch ausgeformt ist,
wobei die Batterieschale (100) ein inneres Versteifungsmittel (140), insbesondere ein sich in der Querrichtung (148) oder einer Längsrichtung (136) der Batterieschale (100) erstreckendes inneres Versteifungsmittel (140), insbesondere ein sich in der Querrichtung (148) der Batterieschale (100) und der Längsrichtung (136) der Batterieschale (100) erstreckendes inneres Versteifungsmittel (140),
und/oder ein äußeres Versteifungsmittel (130), insbesondere zumindest ein sich in der Längsrichtung (136) der Batterieschale (100) erstreckendes äußeres Versteifungsmittel (130), aufweist,
**dadurch gekennzeichnet, dass**
das innere Versteifungsmittel (140) und/oder das äußere Versteifungsmittel (130) ein Fasermaterial aufweist.

2. Batterieschale (100) nach Anspruch 1, **dadurch gekennzeichnet, dass** die Batterieschale (100) mit einem Spritzgießverfahren oder einem Pressverfahren hergestellt ist.

3. Batterieschale (100) nach einem der Ansprüche 1 oder 2, wobei die Batterieschale (100) zumindest ein inneres Versteifungsmittel (140) aufweist, **dadurch gekennzeichnet, dass** das zumindest eine innere Versteifungsmittel (140) einen Kern (142), insbesondere einen strukturierten Kern (142), insbesondere einen Kern (142) in der Mitte von zwei den Kern (142) begrenzenden Decklagen (144) aufweist, insbesondere einen strukturierten Kern (142) aufweisend eine Kreuzrippenstruktur (146).

4. Batterieschale (100) nach einem der vorstehenden Ansprüche, wobei die Batterieschale (100) zumindest ein inneres Versteifungsmittel (140) aufweist, **dadurch gekennzeichnet, dass** das zumindest eine innere Versteifungsmittel (140) zumindest bereichsweise eine Schicht (150) eines Faser-Kunststoff-Verbundes aufweist, insbesondere eine Schicht (150) eines Faser-Kunststoff-Verbundes in einer ersten Decklage (144) eines inneren Versteifungsmittels (140) und/oder eine Schicht (150) eines Faser-Kunststoff-Verbundes in einer zweiten Decklage (144) eines inneren Versteifungsmittels (140).

5. Batterieschale (100) nach einem der vorstehenden Ansprüche, wobei die Batterieschale (100) zumindest ein inneres Versteifungsmittel (140) aufweist, **dadurch gekennzeichnet, dass** das zumindest eine innere Versteifungsmittel (140) zumindest eine Querrippe (141) aufweist.

6. Batterieschale (100) nach einem der vorstehenden Ansprüche, wobei die Batterieschale (100) zumindest ein inneres Versteifungsmittel (140) aufweist, **dadurch gekennzeichnet, dass** sich das zumindest eine innere Versteifungsmittel (140) über eine Höhe von größer gleich 30 % der maximalen Höhenerstreckung erstreckt, bevorzugt von größer gleich 50 % und besonders bevorzugt von größer gleich 70 %.

7. Batterieschale (100) nach einem der vorstehenden Ansprüche, wobei die Batterieschale (100) zumindest ein äußeres Versteifungsmittel (130) aufweist, **dadurch gekennzeichnet, dass** sich das zumindest eine äußere Versteifungsmittel (130) über eine Höhe von größer gleich 30 % der maximalen Höhenerstreckung erstreckt, bevorzugt von größer gleich 50 % und besonders bevorzugt von größer gleich 70 %.

8. Batterieschale (100) nach einem der vorstehenden Ansprüche, wobei die Batterieschale (100) zumindest ein äußeres Versteifungsmittel (130) aufweist, **dadurch gekennzeichnet, dass** sich das zumindest eine äußere Versteifungsmittel (130) über eine Breite von größer gleich 5 % der maximalen Quererstreckung erstreckt, bevorzugt von größer gleich 10 % und besonders bevorzugt von größer gleich 15 %.

9. Batterieschale (100) nach einem der vorstehenden Ansprüche, wobei die Batterieschale (100) zumindest ein äußeres Versteifungsmittel (130) aufweist, **dadurch gekennzeichnet, dass** das äußeres Versteifungsmittel (130) zumindest zwei Gurte (132) aufweist, bevorzugt zumindest drei Gurte (132), wobei die zumindest zwei Gurte (132) zumindest mittelbar durch ein Distanzelement (134), insbesondere einen Steg (134), miteinander verbunden sind.

10. Batterieschale (100) nach Anspruch 9, **dadurch gekennzeichnet, dass** zwischen zwei Gurten (132) zumindest bereichsweise ein strukturierter Kern (131) angeordnet ist, insbesondere ein strukturierter Kern (131) aufweisend eine Kreuzrippenstruktur (133).

11. Batterieschale (100) nach einem der Ansprüche 9 oder 10, wobei die Batterieschale (100) zumindest ein äußeres Versteifungsmittel (130) aufweist, **dadurch gekennzeichnet, dass** das zumindest eine äußere Versteifungsmittel (130) zumindest bereichsweise eine Schicht (150) eines Faser-Kunststoff-Verbundes aufweist, insbesondere eine Schicht (150) eines Faser-Kunststoff-Verbundes in einem Gurt (132) und/oder einem Steg (134).

12. Batterieschale (100) nach einem der vorstehenden Ansprüche, wobei die Batterieschale (100) zumindest ein äußeres Versteifungsmittel (130) aufweist, **dadurch gekennzeichnet, dass** das äußere Versteifungsmittel (130) ein Befestigungsmittel (138) aufweist, insbesondere an einem Kreuzungspunkt von sich kreuzenden Kreuzrippen.

13. Batterieschale (100) nach einem der vorstehenden Ansprüche, wobei die Batterieschale (100) zumindest ein äußeres Versteifungsmittel (130) aufweist, **dadurch gekennzeichnet, dass** das äußeres Versteifungsmittel (130) eine Dichtfläche (135) aufweist.

14. Batterieschale (100) nach einem der vorstehenden Ansprüche, wobei die Batterieschale (100) zumindest ein äußeres Versteifungsmittel (130) aufweist, **dadurch gekennzeichnet, dass** das äußeres Versteifungsmittel (130) einen Auflagebereich (137) aufweist.

15. Batterieschale (100) nach einem der vorstehenden Ansprüche, wobei die Batterieschale (100) zumindest eine Schicht (150) eines Faser-Kunststoff-Verbundes aufweist **dadurch gekennzeichnet, dass** die zumindest eine Schicht (150) eines Faser-Kunststoff-Verbundes im Wesentlichen unidirektional zueinander orientierte Fasern aufweist.

16. Batterieschale (100) nach einem der vorstehenden Ansprüche, wobei die Batterieschale (100) ein inneres Versteifungsmittel (140) und ein äußeres Versteifungsmittel (130) aufweist, **dadurch gekennzeichnet, dass** das innere Versteifungsmittel (140) in das äußere Versteifungsmittel (130) eingreift.

17. Traktionsbatterie, insbesondere eine Traktionsbatterie für ein Kraftfahrzeug, aufweisend eine Batterieschale (100) nach einem der Ansprüche 1 bis 16.

18. Kraftfahrzeug aufweisend eine Batterieschale (100) nach einem der Ansprüche 1 bis 16 und/oder eine Traktionsbatterie nach Anspruch 17.

19. Werkzeug zum Herstellen einer Batterieschale (100) aus Kunststoff aufweisend ein inneres Versteifungsmittel (140) und/oder ein äußeres Versteifungsmittel (130) nach einem der Ansprüche 1 bis 16, wobei das Werkzeug eine Artikelkavität bildet und wobei das Werkzeug ein Mittel zum Füllen der Artikelkavität mit einer Formmasse aus Kunststoff aufweist, **dadurch gekennzeichnet, dass** das Werkzeug zumindest ein Mittel zum Einklemmen eines Fasermaterials, insbesondere eines schockgefrosteten Fasermaterials und/oder eines an den Randschichten geschmolzenen Fasermaterials, aufweist.

20. Werkzeug nach Anspruch 19, **dadurch gekennzeichnet, dass** das Werkzeug zumindest ein Strukturkernwerkzeug aufweist, insbesondere zumindest ein Kreuzrippenwerkzeug, welches zur Ausformung eines strukturierten Kerns (131, 142) eingerichtet ist, insbesondere zur Ausformung eines strukturierten Kerns (131, 142) aufweisend eine Kreuzrippenstruktur (133, 146).

21. Verfahren zum Herstellen einer Batterieschale (100) aus Kunststoff aufweisend ein inneres Versteifungsmittel (140) und/oder ein äußeres Versteifungsmittel (130) nach einem der Ansprüche 1 bis 16, mittels einer Spritzgießvorrichtung oder einer Pressvorrichtung mit einem eine Artikelkavität bildenden Werkzeug nach einem der Ansprüche 19 bis 20, mit Mitteln zum Füllen der Artikelkavität mit einer Formmasse aus Kunststoff, wobei das Herstellverfahren die nachfolgenden Schritte umfasst:
a) Zumindest bereichsweises Bestücken der Artikelkavität mit einem Fasermaterial, insbesondere einem schockgefrosteten Fasermaterial und/oder einem an den Randschichten geschmolzenen Fasermaterial;
b) Füllen der Artikelkavität mit einer Formmasse aus Kunststoff; und
c) Entformen der Batterieschale.

## Claims

1. Battery shell (100), in particular a battery shell (100) for a traction battery, the battery shell (100) being made of plastics, the battery shell (100) comprising a base (102) and side walls (104), the battery shell (100) comprising an inner side (108) and an outer side (106), the battery shell (100) comprising a maximum transverse extension in a transverse direction (148) and a maximum height extension in a height direction (110), wherein the battery shell (100) is monolithically formed,
wherein the battery shell (100) comprises an inner stiffening means (140), in particular an inner stiffening means (140) extending in the transverse direction (148) or a longitudinal direction (136) of the battery shell (100), in particular an inner stiffening means (140) extending in the transverse direction (148) of the battery shell (100) and the longitudinal direction (136) of the battery shell (100),
and/or an outer stiffening means (130), in particular at least one outer stiffening means (130) extending in the longitudinal direction (136) of the battery shell (100), **characterized in that** the inner stiffening means (140) and/or the outer stiffening means (130) has a fiber material.

2. Battery shell (100) according to claim 1, **characterized in that** the battery shell (100) is produced using an injection molding method or a pressing method.

3. Battery shell (100) according to claim 1 or claim 2, the battery shell (100) comprising at least one inner stiffening means (140), **characterized in that** the at least one inner stiffening means (140) has a core (142), in particular a structured core (142), in particular a core (142) in the center of two cover layers (144) delimiting the core (142), in particular a structured core (142) comprising a cross rib structure (146).

4. Battery shell (100) according to any of the preceding claims, the battery shell (100) comprising at least one inner stiffening means (140), **characterized in that** the at least one inner stiffening means (140) has, at least in regions, a layer (150) of a fiber-plastic composite, in particular a layer (150) of a fiber-plastic composite in a first cover layer (144) of an inner stiffening means (140) and/or a layer (150) of a fiber-plastic composite in a second cover layer (144) of an inner stiffening means (140).

5. Battery shell (100) according to any of the preceding claims, the battery shell (100) comprising at least one inner stiffening means (140), **characterized in that** the at least one inner stiffening means (140) has at least one transverse rib (141).

6. Battery shell (100) according to any of the preceding claims, the battery shell (100) comprising at least one inner stiffening means (140), **characterized in that** the at least one inner stiffening means (140) extends over a height of greater than or equal to 30% of the maximum height extension, preferably of greater than or equal to 50% and particularly preferably of greater than or equal to 70%.

7. Battery shell (100) according to any of the preceding claims, the battery shell (100) comprising at least one outer stiffening means (130), **characterized in that** the at least one outer stiffening means (130) extends over a height of greater than or equal to 30% of the maximum height extension, preferably of greater than or equal to 50% and particularly preferably of greater than or equal to 70%.

8. Battery shell (100) according to any of the preceding claims, the battery shell (100) comprising at least one outer stiffening means (130), **characterized in that** the at least one outer stiffening means (130) extends over a width of greater than or equal to 5% of the maximum transverse extent, preferably of greater than or equal to 10% and particularly preferably of greater than or equal to 15%.

9. Battery shell (100) according to any of the preceding claims, the battery shell (100) comprising at least one outer stiffening means (130), **characterized in that** the outer stiffening means (130) has at least two flanges (132), preferably at least three flanges (132), the at least two flanges (132) being connected to one another at least indirectly by a spacer element (134), in particular a web (134).

10. Battery shell (100) according to claim 9, **characterized in that** a structured core (131) is arranged between two flanges (132), at least in regions, in particular a structured core (131) comprising a cross rib structure (133).

11. Battery shell (100) according to claim 9 or claim 10, the battery shell (100) comprising at least one outer stiffening means (130), **characterized in that** the at least one outer stiffening means (130) has, at least in regions, a layer (150) of a fiber-plastic composite, in particular a layer (150) of a fiber-plastic composite in a flange (132) and/or a web (134).

12. Battery shell (100) according to any of the preceding claims, the battery shell (100) comprising at least one outer stiffening means (130), **characterized in that** the outer stiffening means (130) has a fastening means (138), in particular at a crossing point of intersecting cross ribs.

13. Battery shell (100) according to any of the preceding claims, the battery shell (100) comprising at least one outer stiffening means (130), **characterized in that** the outer stiffening means (130) comprises a sealing surface (135).

14. Battery shell (100) according to any of the preceding claims, the battery shell (100) comprising at least one outer stiffening means (130), **characterized in that** the outer stiffening means (130) comprises a resting region (137).

15. Battery shell (100) according to any of the preceding claims, the battery shell (100) comprising at least one layer (150) of a fiber-plastic composite **characterized in that** the at least one layer (150) of a fiber-plastic composite comprises fibers oriented substantially unidirectionally to one another.

16. Battery shell (100) according to any of the preceding claim, the battery shell (100) comprising an inner stiffening means (140) and an outer stiffening means (130), **characterized in that** the inner stiffening means (140) engages in the outer stiffening means (130).

17. Traction battery, in particular a traction battery for a motor vehicle, comprising a battery shell (100) according to any of the claims 1 to 16.

18. Motor vehicle comprising a battery shell (100) according to any of the claims 1 to 16 and/or a traction battery according to claim 17.

19. Tool for producing a battery shell (100) made of plastics material, comprising an inner stiffening means (140) and/or an outer stiffening means (130) according to any of the claims 1 to 16, the tool forming an article cavity and the tool comprising a means for filling the article cavity with a molding compound made of plastics material, **characterized in that** the tool has at least one means for clamping a fiber material, in particular a shock-frozen fiber material and/or a fiber material melted on the edge layers.

20. Tool according to claim 19, **characterized in that** the tool comprises at least one structural core tool, in particular at least one cross rib tool, which is configured to form a structured core (131, 142), in particular for forming a structured core (131, 142) comprising a cross rib structure (133, 146).

21. Method for producing a battery shell (100) made of plastic, comprising an inner stiffening means (140) and/or an outer stiffening means (130) according to any of claims 1 to 16, by means of an injection molding device or a pressing device with a tool forming an article cavity according to any of the claims 19 to 20, comprising means for filling the article cavity with a molding compound made of plastics material, the production method comprising the following steps:
a) Equipping the article cavity with a fiber material, in particular a shock-frozen fiber material and/or a fiber material melted at the edge layers;
b) filling the article cavity with a molding compound made of plastics material;
c) demolding the battery shell.

## Revendications

1. Coque de batterie (100), en particulier coque de batterie (100) pour une batterie de traction, dans laquelle la coque de batterie (100) est moulée à partir de matière plastique, dans laquelle la coque de batterie (100) présente un fond (102) et des parois latérales (104), dans laquelle la coque de batterie (100) présente un côté intérieur (108) et un côté extérieur (106), dans laquelle la coque de batterie (100) présente une extension transversale maximale dans une direction transversale (148) et une extension en hauteur maximale dans une direction en hauteur (110), dans laquelle la coque de batterie (100) est moulée de manière monolithique,
dans laquelle la coque de batterie (100) présente un moyen de renforcement intérieur (140), en particulier un moyen de renforcement intérieur (140) s'étendant dans la direction transversale (148) ou dans une direction longitudinale (136) de la coque de batterie (100), en particulier un moyen de renforcement intérieur (140) s'étendant dans la direction transversale (148) de la coque de batterie (100) et dans la direction longitudinale (136) de la coque de batterie (100),
et/ou un moyen de renforcement extérieur (130), en particulier au moins un moyen de renforcement extérieur (130) s'étendant dans la direction longitudinale (136) de la coque de batterie (100),
**caractérisée en ce que**
le moyen de renforcement intérieur (140) et/ou le moyen de renforcement extérieur (130) présentent un matériau fibreux.

2. Coque de batterie (100) selon la revendication 1, **caractérisée en ce que** la coque de batterie (100) est fabriquée par un procédé de moulage par injection ou un procédé de pressage.

3. Coque de batterie (100) selon l'une des revendications 1 ou 2, dans laquelle la coque de batterie (100) présente au moins un moyen de renforcement intérieur (140), **caractérisée en ce que** l'au moins un moyen de renforcement intérieur (140) présente un noyau (142), en particulier un noyau (142) structuré, en particulier un noyau (142) au milieu de deux couches de recouvrement (144) délimitant le noyau (142), en particulier un noyau (142) structuré présentant une structure à entretoises croisées (146).

4. Coque de batterie (100) selon l'une des revendications précédentes, dans laquelle la coque de batterie (100) présente au moins un moyen de renforcement intérieur (140), **caractérisée en ce que** l'au moins un moyen de renforcement intérieur (140) présente, au moins dans certaines zones, une couche (150) d'un composite fibres-matière plastique, en particulier une couche (150) d'un composite fibres-matière plastique dans une première couche de recouvrement (144) d'un moyen de renforcement intérieur (140) et/ou une couche (150) d'un composite fibres-matière plastique dans une seconde couche de recouvrement (144) d'un moyen de renforcement intérieur (140).

5. Coque de batterie (100) selon l'une des revendications précédentes, dans laquelle la coque de batterie (100) présente au moins un moyen de renforcement intérieur (140), **caractérisée en ce que** l'au moins un moyen de renforcement intérieur (140) présente au moins une entretoise transversale (141).

6. Coque de batterie (100) selon l'une des revendications précédentes, dans laquelle la coque de batterie (100) présente au moins un moyen de renforcement intérieur (140), **caractérisée en ce que** l'au moins un moyen de renforcement intérieur (140) s'étend sur une hauteur supérieure ou égale à 30 % de l'extension en hauteur maximale, de préférence supérieure ou égale à 50 % et de manière particulièrement préférée supérieure ou égale à 70 %.

7. Coque de batterie (100) selon l'une des revendications précédentes, dans laquelle la coque de batterie (100) présente au moins un moyen de renforcement extérieur (130), **caractérisée en ce que** l'au moins un moyen de renforcement extérieur (130) s'étend sur une hauteur supérieure ou égale à 30 % de l'extension en hauteur maximale, de préférence supérieure ou égale à 50 % et de manière particulièrement préférée supérieure ou égale à 70 %.

8. Coque de batterie (100) selon l'une des revendications précédentes, dans laquelle la coque de batterie (100) présente au moins un moyen de renforcement extérieur (130), **caractérisée en ce que** l'au moins un moyen de renforcement extérieur (130) s'étend sur une largeur supérieure ou égale à 5 % de l'extension transversale maximale, de préférence supérieure ou égale à 10 % et de manière particulièrement préférée supérieure ou égale à 15 %.

9. Coque de batterie (100) selon l'une des revendications précédentes, dans laquelle la coque de batterie (100) présente au moins un moyen de renforcement extérieur (130), **caractérisée en ce que** le moyen de renforcement extérieur (130) présente au moins deux sangles (132), de préférence au moins trois sangles (132), dans laquelle les au moins deux sangles (132) sont reliées entre elles au moins indirectement par un élément d'écartement (134), en particulier une barrette (134).

10. Coque de batterie (100) selon la revendication 9,
**caractérisée en ce qu'**un noyau structuré (131) est disposé, au moins dans certaines zones, entre deux sangles (132), en particulier un noyau structuré (131) présentant une structure à entretoises croisées (133).

11. Coque de batterie (100) selon l'une des revendications 9 ou 10, dans laquelle la coque de batterie (100) présente au moins un moyen de renforcement extérieur (130), **caractérisée en ce que** l'au moins un moyen de renforcement extérieur (130) présente, au moins dans certaines zones, une couche (150) d'un composite fibres-matière plastique, en particulier une couche (150) d'un composite fibres-matière plastique dans une sangle (132) et/ou une barrette (134).

12. Coque de batterie (100) selon l'une des revendications précédentes, dans laquelle la coque de batterie (100) présente au moins un moyen de renforcement extérieur (130), **caractérisée en ce que** le moyen de renforcement extérieur (130) présente un moyen de fixation (138), en particulier à un point de croisement d'entretoises croisées qui se croisent.

13. Coque de batterie (100) selon l'une des revendications précédentes, dans laquelle la coque de batterie (100) présente au moins un moyen de renforcement extérieur (130), **caractérisée en ce que** le moyen de renforcement extérieur (130) présente une surface d'étanchéité (135).

14. Coque de batterie (100) selon l'une des revendications précédentes, dans laquelle la coque de batterie (100) présente au moins un moyen de renforcement extérieur (130), **caractérisée en ce que** le moyen de renforcement extérieur (130) présente une zone d'appui (137).

15. Coque de batterie (100) selon l'une des revendications précédentes, dans laquelle la coque de batterie (100) présente au moins une couche (150) d'un composite fibres-matière plastique, **caractérisée en ce que** l'au moins une couche (150) d'un composite fibre-matière plastique présente des fibres orientées de manière sensiblement unidirectionnelle les unes par rapport aux autres.

16. Coque de batterie (100) selon l'une des revendications précédentes, dans laquelle la coque de batterie (100) présente un moyen de renforcement intérieur (140) et un moyen de renforcement extérieur (130),
**caractérisée en ce que** le moyen de renforcement intérieur (140) vient en prise dans le moyen de renforcement extérieur (130).

17. Batterie de traction, en particulier batterie de traction pour un véhicule automobile, présentant une coque de batterie (100) selon l'une des revendications 1 à 16.

18. Véhicule automobile présentant une coque de batterie (100) selon l'une des revendications 1 à 16 et/ou une batterie de traction selon la revendication 17.

19. Outil pour la fabrication d'une coque de batterie (100) en matière plastique présentant un moyen de renforcement intérieur (140) et/ou un moyen de renforcement extérieur (130) selon l'une des revendications 1 à 16, dans lequel l'outil forme une cavité d'article et dans lequel l'outil présente un moyen pour le remplissage de la cavité d'article avec une matière de moulage en matière plastique, **caractérisé en ce que** l'outil présente au moins un moyen pour le serrage d'un matériau fibreux, en particulier d'un matériau fibreux congelé par choc et/ou d'un matériau fibreux fondu au niveau des couches marginales.

20. Outil selon la revendication 19, **caractérisé en ce que** l'outil présente au moins un outil pour noyau structuré, en particulier au moins un outil pour entretoises croisées, qui est conçu pour mouler un noyau structuré (131, 142), en particulier pour mouler un noyau structuré (131, 142) présentant une structure à entretoises croisées (133, 146).

21. Procédé pour la fabrication d'une coque de batterie (100) en matière plastique présentant un moyen de renforcement intérieur (140) et/ou un moyen de renforcement extérieur (130) selon l'une des revendications 1 à 16, au moyen d'un dispositif de moulage par injection ou d'un dispositif de pressage avec un outil formant une cavité d'article selon l'une des revendications 19 à 20, comportant des moyens pour le remplissage de la cavité d'article avec une matière de moulage en matière plastique, dans lequel le procédé de fabrication comprend les étapes suivantes :
a) garniture de la cavité d'article, au moins dans certaines zones, d'un matériau fibreux, en particulier d'un matériau fibreux congelé par choc et/ou d'un matériau fibreux fondu au niveau des couches marginales ;
b) remplissage de la cavité d'article avec une matière de moulage en plastique ; et
c) démoulage de la coque de batterie.
